(19) Europäisches Patentamt
European Patent Office
Office européen des brevets

(11) EP 3 284 783 B1

(12) EUROPEAN PATENT SPECIFICATION

(45) Date of publication and mention of the grant of the patent:
**04.11.2020 Bulletin 2020/45**

(21) Application number: **16780151.3**

(22) Date of filing: **15.04.2016**

(51) Int Cl.:
*C08L 33/04* (2006.01) *C09D 5/16* (2006.01)
*C09D 7/00* (2018.01) *C09D 133/04* (2006.01)

(86) International application number:
**PCT/JP2016/062158**

(87) International publication number:
**WO 2016/167360 (20.10.2016 Gazette 2016/42)**

(54) **ANTIFOULING COATING COMPOSITION**

BEWUCHSHEMMENDE BESCHICHTUNGSZUSAMMENSETZUNG

COMPOSITION DE REVÊTEMENT ANTISALISSURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2015 JP 2015084199**
**07.09.2015 JP 2015175470**
**09.09.2015 JP 2015177629**

(43) Date of publication of application:
**21.02.2018 Bulletin 2018/08**

(73) Proprietor: **Mitsubishi Chemical Corporation**
**Tokyo 100-8251 (JP)**

(72) Inventors:
- **KATSUMATA, Sho**
  **Tokyo 1008251 (JP)**
- **TANIGUCHI, Kana**
  **Tokyo 1008251 (JP)**
- **NAKAMURA, Junichi**
  **Tokyo 1008251 (JP)**
- **URA, Masatoshi**
  **Tokyo 1008251 (JP)**
- **KAMON, Yoshihiro**
  **Tokyo 1008251 (JP)**
- **ASAI, Takafumi**
  **Tokyo 1008251 (JP)**
- **ANSAI, Ryuichi**
  **Tokyo 1008251 (JP)**

(74) Representative: **Ter Meer Steinmeister & Partner**
**Patentanwälte mbB**
**Nymphenburger Straße 4**
**80335 München (DE)**

(56) References cited:
**EP-A1- 1 367 100**
**WO-A1-2007/026692**
**WO-A1-2013/183637**
**JP-A- H04 103 671**
**JP-A- H09 194 790**
**JP-A- 2001 081 147**
**JP-A- 2001 302 989**
**JP-A- 2002 194 293**
**JP-A- 2006 503 115**
**JP-A- 2010 280 864**
**JP-A- 2011 140 544**
**JP-A- 2012 005 934**
**US-A1- 2009 053 166**
**US-A1- 2012 010 342**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 284 783 B1

## Description

### Technical Field

The present invention relates to an antifouling coating composition.

The present application is based upon and claims the benefit of priority to Japanese Application No. 2015-084199, filed April 16, 2015, No. 2015-175470, filed September 7, 2015, and No. 2015-177629, filed September 9, 2015.

### Background Art

Antifouling coating paints are known to be applied on marine structures such as a ship (in particular the bottom portion of a ship) to prevent attachment of submarine organisms which may cause corrosion of the submerged portion or reduction of navigation speed. Hydrolyzable antifouling coating paints are widely used because of their characteristics. The surface of coating film formed by a hydrolyzable antifouling coating paint gradually dissolves in water for it to be renewed (self-polishing), and the antifouling component is constantly exposed on the coating surface, thereby expressing long-lasting antifouling effects. Antifouling coating paints that contain metal-containing polymers are known as being hydrolyzable. For example, Patent Literatures 1 and 2 propose coating compositions formed using divalent metal-containing resins. However, as described in Patent Literatures 1 and 2, when adding cuprous oxide generally used as an antifouling agent for achieving excellent long-lasting antifouling effects in seawater, dissolution stability of the coating composition tends to decline. Therefore, problems may arise such as a decrease in self-polishing properties caused by the lowered hydrolysis rate of coating film (also referred to as the dissolution rate)

Patent Literature 3 proposes a hydrolyzable coating composition formed mainly using a 1-(alkyloxy)ester group-containing resin as a non-metallic resin. When a coating paint includes a non-metallic resin as the main component, its long-term dissolution capability will not decrease. However, the coating film made of the coating composition of Patent Literature 3 shows a low dissolution stability, and its hydrolysis rate (also known as the dissolution rate) increases as time elapses. Accordingly, an excessive amount of coating film is consumed, making it difficult to achieve long-lasting coating effects. Moreover, since the dissolution rate increases chronologically, the water resistance of the coating film is lowered, thus likely causing defects such as cracking and peeling.

Moreover, as a solvent to reduce viscosity and to enhance coatability, the coating composition proposed in Patent Literature 3 has a higher content of a volatile organic compound (hereinafter abbreviated as a "VOC"), which is required to be reduced in view of environmental concerns. As described, insufficient dissolution stability of conventional coating films causes problems such as lower self-polishing properties due to decreased dissolution rates, excessive consumption of coating films due to increased dissolution rates, and so on. Therefore, long-lasting antifouling effects are not expected in conventional coating films. Other problems are lower storage stability and higher VOC content.

### CITATION LIST

### PATENT LITERATURE

Patent Literature 1: JP 2002-12630A
Patent Literature 2: JP H07-64985B
Patent Literature 3: JP H04-103671A Other relevant documents are EP-A-1367100, US-A-2012/010342 and US-A-2009/053366.

### SUMMARY OF THE INVENTION

### PROBLEMS TO BE SOLVED BY THE INVENTION

The objective of the present invention is to provide a resin composition for producing a low-VOC antifouling coating composition having excellent storage stability and coatability so that such an antifouling coating composition is provided to form a coating film that exhibits high dissolution stability and self-polishing properties while suppressing excessive film consumption and defects to achieve long-lasting antifouling effects.

SOLUTIONS TO THE PROBLEMS

The present invention has the following aspects.

[1] A resin composition, formed to have a polymer (A) containing at least one monomer-derived structural unit having the structure represented by formula (1), (2) or (3) below, and after the resin composition is stored at 40°C for 30 days, the decomposition rate of the structure represented by formula (1), (2) or (3) in the polymer (A) is 20% or lower.

[Chemical Formula 1]

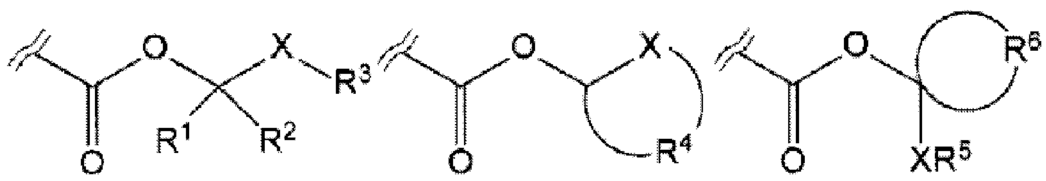

(1) (2) (3)

(In the above formulas, "X" is an ether oxygen atom, sulfide sulfur atom or amine nitrogen atom; $R^1$ and $R^2$ are each a hydrogen atom or a C1 to C10 alkyl group; $R^3$ and $R^5$ are each a C1 to C20 alkyl, cycloalkyl or aryl group, which may be substituted with at least one substituent selected from among cycloalkyl, aryl, alkoxy, alkanoyloxy and aralkyl groups; and $R^4$ and $R^6$ are each a C1 to C10 alkylene group, which may be substituted with at least one substituent selected from among cycloalkyl, aryl, alkoxy, alkanoyloxy and aralkyl groups.)
and containing at least one component selected from among compounds reactable with acid, acidic compounds, and basic compounds.
[3] The resin composition according to [2], in which the compound reactable with acid includes at least one compound represented by formula (31), (32) or (33) below.

[Chemical Formula 2]

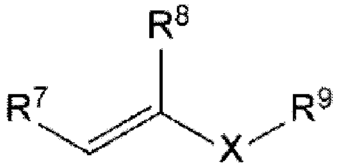

(31)

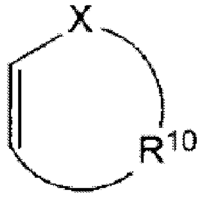

(32)

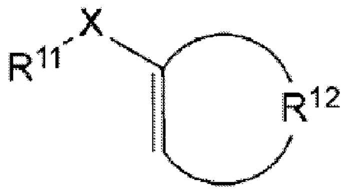

(33)

(In the above formulas, "X" is an ether oxygen atom, sulfide sulfur atom or amine nitrogen atom; $R^7$ is a hydrogen atom or a C1 to C9 alkyl group; $R^8$ is a hydrogen atom or a C1 to C10 alkyl group; $R^9$ and $R^{11}$ are each a C1 to C20 alkyl, cycloalkyl or aryl group, which may be substituted with at least one substituent selected from among cycloalkyl, aryl, alkoxy, alkanoyloxy and aralkyl groups; $R^{10}$ is a single bond or a C1 to C9 alkylene group, which may be substituted with at least one substituent selected from among cycloalkyl, aryl, alkoxy, alkanoyloxy and aralkyl groups; and $R^{12}$ is a C1 to C9 alkylene group, which may be substituted with at least one substituent selected from among cycloalkyl, aryl, alkoxy, alkanoyloxy and aralkyl groups.)
[4] The resin composition according to any of [1] to [3], in which the polymer (A) includes a monomer-derived structural unit having the structure represented by formula (1) below.

[Chemical Formula 3]

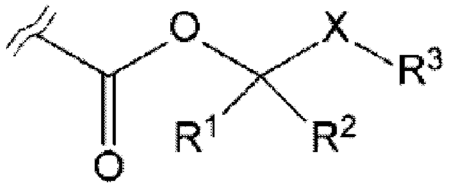

(1)

(In the above formula (1), "X" is an ether oxygen atom, sulfide sulfur atom or amine nitrogen atom; $R^1$ and $R^2$ are each a hydrogen atom or a C1 to C10 alkyl group; $R^3$ is a C1 to C20 alkyl, cycloalkyl or aryl group, which may be substituted with at least one substituent selected from among cycloalkyl, aryl, alkoxy, alkanoyloxy and aralkyl groups; and the total number of carbon atoms in $R^1$, $R^2$ and $R^3$ is 4 or greater.)

[5] The resin composition according to any of [1] to [4], in which the polymer (A) includes a monomer-derived structural unit having the structure represented by formula (1) below.

[Chemical Formula 4]

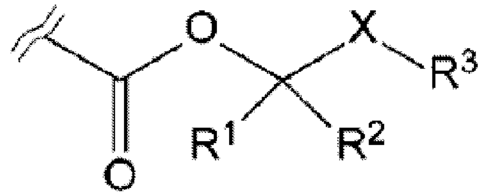

(1)

(In the above formula (1), "X" is an ether oxygen atom, sulfide sulfur atom or amine nitrogen atom; $R^1$ and $R^2$ are each a hydrogen atom or a C1 to C10 alkyl group; $R^3$ is a C1 to C20 alkyl, cycloalkyl or aryl group, which may be substituted with at least one substituent selected from among cycloalkyl, aryl, alkoxy, alkanoyloxy and aralkyl groups; and the total number of carbon atoms in $R^1$, $R^2$ and $R^3$ is 8 or greater.)

[6] The resin composition according to any of [1] to [5], in which the polymer (A) further includes the structural unit derived from an oxyethylene group-containing (meth)acrylate monomer represented by formula (2-1) below.

$$Z^1\text{-}(CH_2CH_2O)_nR^{21} \cdots \qquad (2\text{-}1)$$

(In the formula, $Z^1$ is an acryloyloxy or methacryloyloxy group; $R^{21}$ is a hydrogen atom or a C1 to C10 alkyl or aryl group; and "n" is an integer of 1 to 15.)

[7] The resin composition according to any of [1] to [6], in which the weight-average molecular weight of the polymer (A) is 2,000 to 19,000, the content of the polymer (A) is at least 57 mass% of the total mass of the resin composition, and the viscosity at 25°C determined using a Brookfield viscometer is lower than 2,000 mPa•s.

[8] The resin composition according to any of [1] to [7], in which the weight-average molecular weight of the polymer (A) is 3,000 to 16,000, the content of the polymer (A) is at least 59 mass% of the total mass of the resin composition, and the viscosity determined the same as above is lower than 1,000 mPa•s.

[9] An antifouling coating composition, formed to have the resin composition according to any of [1] to [8] and an antifouling agent.

[10] The antifouling coating composition according to [9], containing at least one antifouling agent selected from among cuprous oxide, 4-bromo-2-(4-chlorophenyl)-5-(trifluoromethyl)-1H-pyrrole-3-carbonitrile, and medetomidine.

[11] The antifouling coating composition according to [9] or [10], in which the content of a volatile organic compound is 410 g/L or less.

[12] The antifouling coating composition according to any of [9] to [11], in which the viscosity at 25°C determined using a Brookfield viscometer is lower than 3,000 mPa•s.

[13] The antifouling coating composition according to any of [9] to [12], in which after it is stored at 40°C for 90 days the change in viscosity determined using a Brookfield viscometer is 400% or lower.
[14] The antifouling coating composition according to any of [9] to [13], further containing a thermoplastic resin.

EFFECTS OF THE INVENTION

According to the present invention, a resin composition is provided for producing a low-VOC antifouling coating composition having excellent storage stability and coatablility so that such an antifouling coating composition is provided to form a coating film that exhibits high dissolution stability and self-polishing properties while suppressing excessive film consumption and defects to achieve long-lasting antifouling effects.

DETAILED DESCRIPTION OF THE EMBODIMENTS

The following definitions of terminologies apply to the specification and claims of the present invention.
A "volatile organic compound (VOC)" means an organic compound that is easily vaporized under a normal temperature and pressure setting: normal temperature and pressure means 10°C to 30°C and 1000 Pa to 1050 Pa, for example.
A "structural unit" means a unit formed when a monomer is polymerized, or a unit part of which is converted when a polymer is treated.
"(Meth)acrylate" refers collectively to acrylate and methacrylate, and "(meth)acrylic acid" refers collectively to acrylic acid and methacrylic acid.

<Resin Composition>

A resin composition related to the present invention is formed to have a polymer (A) containing at least one monomer-derived structural unit having the structure represented by formula (1), (2) or (3) below, and after the resin composition is stored at 40°C for 30 days, the decomposition rate of the structure represented by formula (1), (2) or (3) in the polymer (A) is 20% or lower.

[Chemical Formula 5]

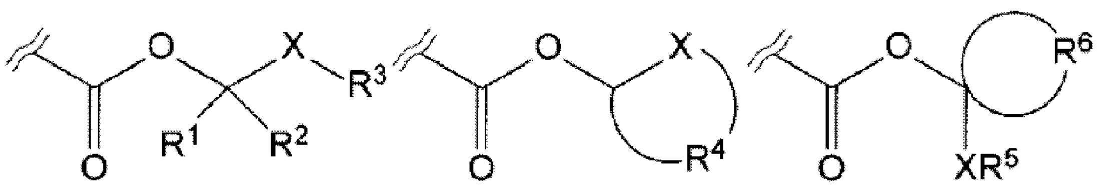

(1) (2) (3)

(In the above formulas, "X" is an ether oxygen atom, sulfide sulfur atom or amine nitrogen atom; $R^1$ and $R^2$ are each a hydrogen atom or a C1 to C10 alkyl group; $R^3$ and $R^5$ are each a C1 to C20 alkyl, cycloalkyl or aryl group, which may or may not be substituted with at least one substituent selected from among cycloalkyl, aryl, alkoxy, alkanoyloxy and aralkyl groups; and $R^4$ and $R^6$ are each a C1 to C10 alkylene group, which may or may not be substituted with at least one substituent selected from among cycloalkyl, aryl, alkoxy, alkanoyloxy and aralkyl groups.)

<(Co)polymer (A)>

The polymer (A) includes a monomer-derived structural unit having the structure represented by formula (1), (2) or (3) below.

[Chemical Formula 6]

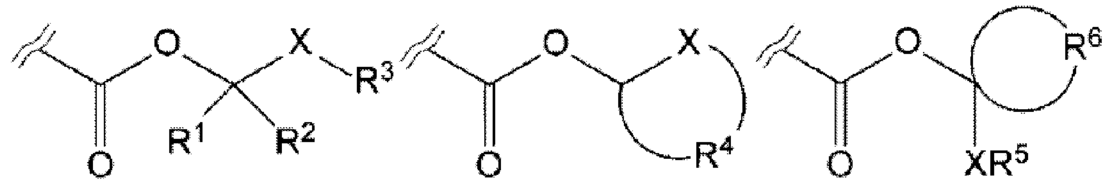

(1) (2) (3)

(In the above formulas, "X" is an ether oxygen atom, sulfide sulfur atom or amine nitrogen atom; $R^1$ and $R^2$ are each a hydrogen atom or a C1 to C10 alkyl group; $R^3$ and $R^5$ are each a C1 to C20 alkyl, cycloalkyl or aryl group, which may or may not be substituted with at least one substituent selected from among cycloalkyl, aryl, alkoxy, alkanoyloxy and aralkyl groups; and $R^4$ and $R^6$ are each a C1 to C10 alkylene group, which may or may not be substituted with at least one substituent selected from among cycloalkyl, aryl, alkoxy, alkanoyloxy and aralkyl groups.)

To enhance the dissolution stability of coating film, it is most preferable to use a monomer having the structure represented by formula (1).

When $R^1$ or $R^2$ in formula (1) is a C1 to C10 alkyl group, examples of a C1 to C10 alkyl group are a methyl group, ethyl group, propyl group, isopropyl group, butyl group, isobutyl group, pentyl group, hexyl, 2-ethylhexyl group and the like.

When $R^1$ or $R^2$ is a C1 to C10 alkyl group, the number of carbon atoms in the alkyl group is preferred to be 1 to 4, more preferably 1 to 3, even more preferably 1 or 2.

Examples of a preferred combination of $R^1$ and $R^2$ are a hydrogen atom and a methyl group, two methyl groups, a hydrogen atom and a C2 to C10 alkyl group (hereinafter also referred to as a "long-chain alkyl group"), a methyl group and a long-chain alkyl group, two hydrogen atoms, two long-chain alkyl groups, and the like. Among them, to achieve an appropriate hydrolysis property of the coating film, a combination of a hydrogen atom and a methyl group is preferred.

When $R^3$ is a C1 to C20 alkyl group, aforementioned C1 to C10 alkyl groups, a decyl group, dodecyl group, tetradecyl group or the like may be listed as $R^3$, for example. When $R^3$ is a C1 to C20 alkyl group, the number of carbon atoms in $R^3$ is preferred to be 3 to 20, more preferably 7 to 20. When the number of carbon atoms is 7 or greater, excellent water resistance and crack resistance are obtained.

When $R^3$ is a cycloalkyl group, preferred examples are C4 to C8 cycloalkyl groups such as a cyclohexyl or cyclopentyl group.

When $R^3$ is an aryl group, preferred examples are C6 to C20 aryl groups such as a phenyl or naphthyl group.

As for $R^3$, a C3 to C20 alkyl or cycloalkyl group is preferred.

In addition, the total number of carbon atoms in $R^1$, $R^2$ and $R^3$ is preferred to be 4 or greater, more preferably 8 or greater. By setting the total number in such a range, excellent water resistance and crack resistance are obtained.

The alkyl, cycloalkyl or aryl group in $R^3$ may be substituted with at least one substituent selected from among cycloalkyl, aryl, alkoxy, alkanoyloxy and aralkyl groups. When substituted, the number of substituents may be one or more than one.

Cycloalkyl and aryl groups as substituents may be those listed above. Examples of the alkoxy group are a methoxy group, ethoxy group, propoxy group, butoxy group and the like. Examples of the alkanoyloxy group are an ethanoyloxy group or the like. As for an aralkyl group, a benzyl group or the like may be used.

In formula (2), when $R^4$ is a C1 to C10 alkylene group, a methylene group, ethylene group, propylene group, butylene group, hexylene group or the like, for example, may be listed as $R^4$.

The number of carbon atoms in $R^4$ is preferred to be 2 to 7, more preferably 3 to 4.

The alkylene group may be substituted with at least one substituent selected from among cycloalkyl, aryl, alkoxy, alkanoyloxy and aralkyl groups. When substituted, the number of substituted groups may be one or more than one. Specific examples of a substituent to be substituted with an alkylene group are those listed as examples of $R^3$.

In formula (3), examples of $R^5$ are the same as those of $R^3$ in formula (1), and the preferred embodiment is also the same. Moreover, examples of $R^6$ are the same as those of $R^4$ in formula (2), and the preferred embodiment is also the same.

Polymer (A) is preferred to have structural unit (u1) derived from a monomer (m1) having an ethylenically unsaturated bond (polymerizable carbon-carbon double bond) and a functional group (I).

The structural unit (u1) of polymer (A) may be one kind or two or more kinds.

In addition to structural unit (u1), polymer (A) may further include another structural unit (u2), which is different from structural unit (u1).

Polymer (A) is preferred to be a (meth)acrylic polymer from the viewpoints of hydrolysis property, water resistance, crack resistance and storage stability. A "(meth)acrylic polymer" means at least part of the structural unit of polymer (A) is a unit derived from a (meth)acrylic monomer. Such a (meth)acrylic polymer may further include a structural unit derived from another monomer different from the (meth)acrylic monomer (for example, a vinyl monomer such as styrene). A "(meth)acrylic monomer" means a monomer with an acryloyl group or a methacryloyl group.
When polymer (A) is a (meth)acrylic polymer having structural units (u1) and (u2), a structural unit derived from a (meth)acrylic monomer may be included in either of or both of structural units (u1) and (u2).

(Structural unit (u1))

Structural unit (u1) has a structure formed when an ethylenically unsaturated bond of monomer (m1) is cleaved.
Considering the viscosity of the resin composition, monomer (m1) is preferred to be a monofunctional monomer having an ethylenically unsaturated bond.
Examples of monomer (m1) are compounds represented by formula (11), (12) or (13) below.

[Chemical Formula 7]

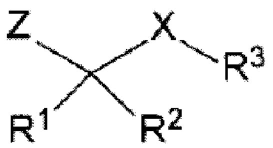
(11)

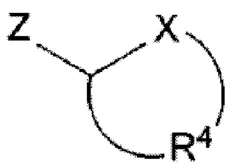
(12)

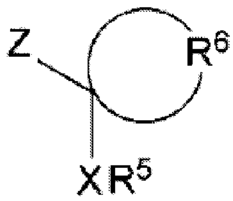
(13)

(In the formulas above, "X" is an ether oxygen atom, sulfide sulfur atom or amine nitrogen atom; "Z" indicates $CH_2$=CH-COO-, $CH(CH_3)$=CH-COO-, $CH_2$=$C(CH_3)$-COO-, $CHR^X$=CH-COO-, $CH_2$=$C(CH_2R^X)$-COO-, or $CH_2$=$CR^X$-$CH_2COO$-; $R^X$ is a 1-(alkyloxy)ester group, 1-(alkylthio)ester group, 1-(dialkyl amino)ester group, or alkyl ester group; $R^1$ and $R^2$ are each a hydrogen atom or a C1 to C10 alkyl group; $R^3$ and $R^5$ are each a C1 to C20 alkyl, cycloalkyl or aryl group, which may or may not be substituted with at least one substituent selected from among cycloalkyl, aryl, alkoxy, alkanoyloxy and aralkyl groups; and $R^4$ and $R^6$ are each a C1 to C10 alkylene group, which may or may not be substituted with at least one substituent selected from among cycloalkyl, aryl, alkoxy, alkanoyloxy and aralkyl groups.)
$R^1$ to $R^6$ in formulas (11) to (13) respectively correspond to $R^1$ to $R^6$ in formulas (1) to (3) listed above.
As listed above for "Z", $CH_2$=CH-COO- is an acryloyloxy group, and $CH_2$=$C(CH_3)$-COO- is a methacryloyloxy group. $CH(CH_3)$=CH-COO- is a crotonoyloxy group (ethylenically unsaturated bond is a trans isomer) or an isocrotonoyloxy group (ethylenically unsaturated bond is a cis isomer). $CHR^X$=CH-COO- is a maleinoyloxy group (ethylenically unsaturated bond is a cis isomer) or a fumaroyloxy group (ethylenically unsaturated bond is a trans isomer), in which a carboxyl group is substituted with a 1-(alkyloxy)ester group, 1-(alkylthio)ester group, 1-(dialkylamino)ester group, or alkyl ester group.
When $R^X$ is a 1-(alkyloxy)ester group, 1-(alkylthio)ester group, or 1-(dialkylamino)ester group, examples of $R^X$ are the same as those listed above. $R^X$ is preferred to have the same structure as the group to which "Z" is bonded. For example, when a compound is represented by formula (11), $R^X$ is preferred to be a group represented by $-CR^1R^2-OR^3$.
When $R^X$ is an alkyl ester group, $R^X$ is represented by $-COOR^{X1}$, where $R^{X1}$ is an alkyl group. The alkyl group for $R^{X1}$ is preferred to be a C1 to C6 alkyl group, especially preferably a methyl group.
$CH_2$=$C(CH_2R^X)$-COO- or $CH_2$=$CR^X$-$CH_2COO$- is an itaconoyloxy group in which a carboxyl group is substituted with a 1-(alkyloxy)ester group, 1-(alkylthio)ester group, 1-(dialkylamino)ester group, or alkyl ester group. $R^X$ is the same as those listed above.
"Z" is preferred to be $CH_2$=CH-COO-, or $CH(CH_3)$=CH-COO-.
Examples of monomer (m1) are those represented below.

[Chemical Formula 8]

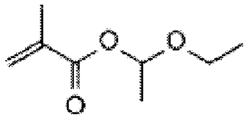 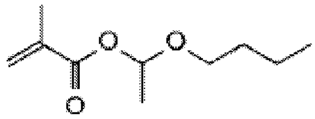 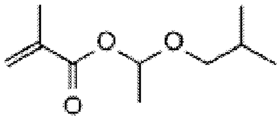

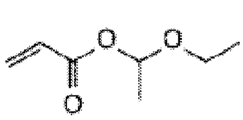 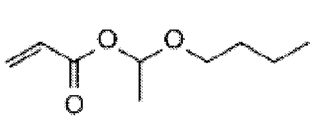 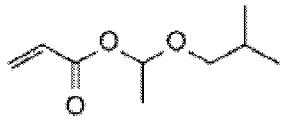

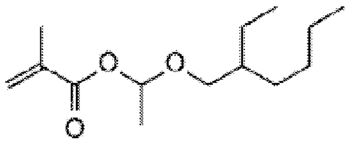 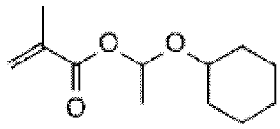 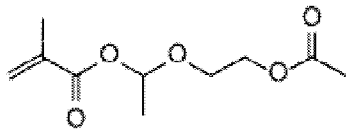

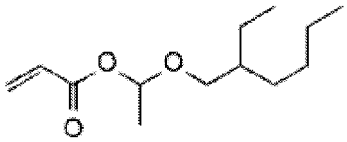 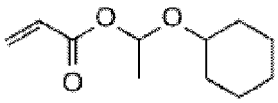 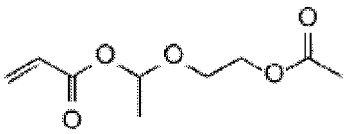

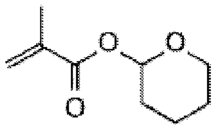 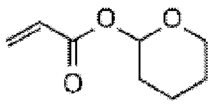 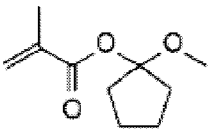 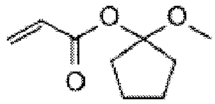

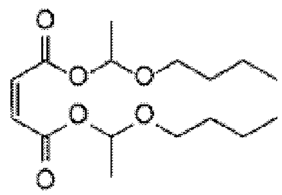 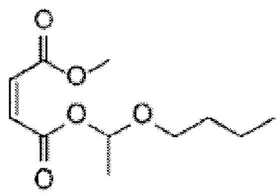

(Structural unit (u2))

Examples of structural unit (u2) are those derived from monomer (m2) which has an ethylenically unsaturated bond but does not have a functional group (I). Such a structural unit has the structure formed when the ethylenically unsaturated bond of monomer (m2) is cleaved.

Examples of monomer (m2) are substituted or unsubstituted alkyl (meth)acrylates such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, lauryl (meth)acrylate, stearyl (meth)acrylate, behenyl (meth)acrylate, 1-methyl-2-methoxyethyl(meth)acrylate, 3-methoxybutyl (meth)acrylate, and 3-methyl-3-methoxybutyl (meth)acrylate; substituted or unsubstituted aralkyl (meth)acrylates such as benzyl (meth)acrylate, m-methoxyphenylethyl (meth)acrylate, and p-methoxyphenylethyl (meth)acrylate; substituted or unsubstituted aryl (meth)acrylates such as phenyl (meth)acrylate, m-methoxyphenyl (meth)acrylate, p-methoxyphenyl (meth)acrylate, and o-methoxyphenylethyl (meth)acrylate; alicyclic (meth)acrylates such as, isobornyl(meth)acrylate and cyclohexyl (meth)acrylate; hydrophobic group-containing (meth)acrylate monomers such as trifluoroethyl (meth)acrylate, perfluorooctyl (meth)acrylate and perfluorocyclohexyl (meth)acrylate; oxyethylene group-containing (meth)acrylate monomers such as 2-methoxyethyl (meth)acrylate, 2-ethoxyethyl (meth)acrylate, 2-butoxyethyl (meth)acrylate, butoxydiethylene glycol (meth)acrylate, methoxytriethylene glycol (meth)acrylate, methoxypolyethylene glycol (meth)acrylate, phenoxyethyl (meth)acrylate and 2-(2-ethylhexaoxy)ethyl (meth)acrylate; hydroxyl group-containing (meth)acrylate monomers such as 2-hydroxyethyl (meth)acrylate, 2-hydroxypropyl (meth)acrylate, 4-hydroxybutyl (meth)acrylate and glycerol (meth)acrylate; terminal alkoxy allylated polyether monomers such as methoxy polyethylene glycol allyl ether, methoxy polypropylene glycol allyl ether, butoxy polyethylene glycol allyl ether, butoxy polypropylene glycol allyl ether, methoxy polyethylene glycol-polypropylene glycol allyl ether and butoxy polyethylene glycol-polypropylene glycol allyl ether; epoxy group-containing vinyl monomers such as glycidyl (meth)acrylate, glycidyl $\alpha$-ethyl acrylate and 3,4-epoxybutyl (meth)acrylate; primary or secondary amino group-containing vinyl monomers such as butylaminoethyl (meth)acrylate and (meth)acrylamide; tertiary

amino group-containing vinyl monomers such as dimethylaminoethyl (meth)acrylate, diethylaminoethyl (meth)acrylate, dimethylaminopropyl (meth)acrylate, dimethylaminobutyl (meth)acrylate, dibutylaminoethyl (meth)acrylate, dimethylaminoethyl (meth)acrylamide and dimethylaminopropyl (meth)acrylamide; heterocyclic basic monomers such as vinylpyrrolidone, vinylpyridine and vinylcarbazole; organosilyl group-containing vinyl monomers such as trimethylsilyl (meth)acrylate, triethylsilyl (meth)acrylate, tri-n-propylsilyl(meth)acrylate, tri-n-butylsilyl (meth)acrylate, tri-n-amylsilyl(meth)acrylate, tri-n-hexylsilyl (meth)acrylate, tri-n-octylsilyl (meth)acrylate, tri-n-dodecyl silyl (meth)acrylate, triphenylsilyl (meth)acrylate, tri-p-methylphenylsilyl (meth)acrylate, tribenzylsilyl (meth)acrylate, triisopropylsilyl (meth)acrylate, triisobutylsilyl (meth)acrylate, tri-s-butylsilyl (meth)acrylate, tri-2-methylisopropylsilyl (meth)acrylate, tri-t-butylsilyl (meth)acrylate, ethyldimethylsilyl (meth)acrylate, n-butyldimethylsilyl (meth)acrylate, diisopropyl-n butylsilyl (meth)acrylate, n-octyldi-n butylsilyl (meth)acrylate, diisopropyl stearylsilyl (meth)acrylate, dicyclohexyl phenylsilyl (meth)acrylate, t-butyldiphenylsilyl (meth)acrylate, lauryl diphenylsilyl (meth)acrylate, triisopropylsilyl methyl maleate, triisopropylsilyl amyl maleate, tri-n-butylsilyl n-butyl maleate, t-butyldiphenylsilyl methyl maleate, t-butyldiphenylsilyl n-butyl maleate, triisopropylsilyl methyl fumarate, triisopropylsilyl amyl fumarate, tri-n-butylsilyl n-butyl fumarate, t-butyldiphenylsilyl methyl fumarate and t-butyldiphenylsilyl n-butyl fumarate; anhydride group-containing vinyl monomers such as maleic anhydride and itaconic anhydride; carboxyl group-containing vinyl monomers such as acrylic acid, methacrylic acid, crotonic acid, vinyl benzoic acid, fumaric acid, itaconic acid, maleic acid, citraconic acid, monomethyl maleate, monoethyl maleate, monobutyl maleate, monooctyl maleate, monomethyl itaconate, monoethyl itaconate, monobutyl itaconate, monooctyl itaconate, monomethyl fumarate, monoethyl fumarate, monobutyl fumarate, monooctyl fumarate, monoethyl citrate, monohydroxyethyl tetrahydrophthalate (meth)acrylate, monohydroxypropyl tetrahydrophthalate (meth)acrylate, monohydroxybutyl tetrahydrophthalate (meth)acrylate, monohydroxyethyl phthalate (meth)acrylate, monohydroxypropyl phthalate (meth)acrylate, monohydroxyethyl succinate (meth)acrylate, monohydroxypropyl succinate (meth)acrylate, monohydroxyethyl maleate (meth)acrylate and monohydroxypropyl maleate (meth)acrylate; unsaturated dicarboxylic acid diester monomers such as dimethyl maleate, dibutyl maleate, dimethyl fumarate, dibutyl fumarate, dibutyl itaconate and diperfluorocyclohexyl fumarate; cyano group-containing vinyl monomers such as acrylonitrile and methacrylonitrile; vinyl ether monomers such as alkyl vinyl ethers (for example, ethyl vinyl ether, propyl vinyl ether, butyl vinyl ether, hexyl vinyl ether and 2-ethylhexyl vinyl ether) and cycloalkyl vinyl ethers (for example, cyclohexyl vinyl ether); vinyl ester monomers such as vinyl acetate, vinyl propionate, vinyl butyrate, and vinyl benzoate; aromatic vinyl monomers such as styrene, vinyl toluene and $\alpha$-methylstyrene; halogenated olefins such as vinyl chloride, vinylidene chloride, vinyl fluoride, vinylidene fluoride and chlorotrifluoroethylene; polyfunctional monomers such as ethylene glycol di(meth)acrylate, diethylene glycol di(meth)acrylate, triethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, 1,9-nonanediol di(meth)acrylate, 1,10-decanediol di(meth)acrylate, trimethylolpropane tri(meth)acrylate, pentaerythritol tetra(meth)acrylate, dipentaerythritol hexa(meth)acrylate, allyl methacrylate, triallyl cyanurate, diallyl maleate and polypropylene glycol diallyl ether. Those listed above may be used alone or in combination thereof.

Considering the viscosity of a resin composition, the monomer (m2) is preferred to be a monofunctional monomer having an ethylenically unsaturated bond.

From the viewpoints of dissolution rates and crack resistance of the coating film, the structural unit (u2) is preferred to be those derived from an oxyethylene group-containing (meth)acrylate monomer represented by formula (2-1) below. As for the oxyethylene-group-containing (meth)acrylate monomer, compounds represented by formula (2-1) below are preferred.

$$Z^1\text{-}(CH_2CH_2O)_nR^{21} \cdots \qquad (2\text{-}1)$$

(In the above formula: $Z^1$ is an acryloyloxy or methacryloyloxy group; $R^{21}$ is a hydrogen atom or a C1 to C10 alkyl or aryl group; and "n" is an integer of 1 to 15.)

In formula (2-1) where $Z^1$ is an acryloyloxy or methacryloyloxy group, the hydrolysis rate tends to be higher if $Z^1$ is an acryloyloxy group, and any acryloyloxy group may be selected based on its dissolution rate.

C1 to C10 alkyl and aryl groups for $R^{21}$ are the same as those listed above for $R^1$ and $R^3$.

Considering water resistance and crack resistance, "n" is preferred to be an integer of 1 to 10, more preferably 1 to 5, even more preferably 1 to 3, especially preferably 1 or 2.

For the plasticity, crack resistance and peel resistance of the coating film to be well balanced with its long-term self-polishing properties, the structural unit (u2) is preferred to be those derived from hydrophobic group-containing (meth)acrylate monomers.

Alkyl (meth)acrylates are preferable as hydrophobic group-containing (meth)acrylate monomers.

The content of structural unit (u2) is preferred to be 1 to 80 mass%, more preferably 10 to 70 mass%, even more preferably 20 to 60 mass%, of the sum (100 mass%) of all of the structural units.

When the polymer (A) has a structural unit derived from an oxyethylene group-containing (meth)acrylate monomer, the content of such a structural unit is preferred to be 1 to 80 mass%, more preferably 5 to 60 mass%, even more

preferably 20 to 50 mass%, of the sum of all of the structural units. When the content of the structural unit is at the above lower limit or greater, the hydrophilic property of coating film is further enhanced, and self-polishing properties are further improved. When the content of the structural unit is no greater than the above upper limit, the coating film has an appropriate hydrolysis property, the long-lasting self-polishing properties are maintained, and antifouling effects are further enhanced.

When the polymer (A) includes a structural unit derived from a monomer (m2) different from an oxyethylene group-containing (meth)acrylate monomer, the content of such a structural unit is preferred to be 1 to 98 mass%, more preferably 10 to 98 mass%, even more preferably 10 to 80 mass%, of the sum of all of the structural units. When the content of the structural unit is within the above range, the plasticity, crack resistance and peel resistance of the coating film are enhanced, and antifouling effects are thereby even more enhanced. When the content of the structural unit is no greater than the above upper limit, the coating film achieves an appropriate hydrolysis property, long-lasting self-polishing properties are maintained, and antifouling effects are further enhanced.

The sum of structural units (u1) and (u2) is 100 mass%.

The weight-average molecular weight (Mw) of polymer (A) is 2,000 to 100,000, preferably 2,000 to 35,000, more preferably 2,000 to 19,000, even more preferably 3,000 to 16,000. When the weight-average molecular weight of polymer (A) is no greater than 19,000, the viscosity of the resin composition is capped at lower than 2,000 mPa•s even if the polymer (A) is contained at 57 mass% or more. Also, the antifouling effects of the coating film are excellent. When the weight-average molecular weight is 2,000 or greater, the coating film achieves sufficient strength and durability.

The number-average molecular weight (Mn) of polymer (A) is 1,000 to 30,000, preferably 1,000 to 12,000, more preferably 2,000 to 9,000.

The polydispersity (Mw/Mn) of polymer (A) is 1.5 to 10.0, preferably 1.5 to 5.0, more preferably 2.2 to 3.0.

The weight-average and number-average molecular weights of polymer (A) are determined by gel permeation chromatography (GPC) using polystyrene as standard resin.

The glass transition temperature (Tg) of polymer (A) is preferred to be -20 to 60°C, more preferably 0 to 40°C. When the Tg of polymer (A) is no higher than the upper limit of the above range, the viscosity of a resin composition is further lowered. When the Tg is at least the above lower limit, physical properties of the resin coating film are excellent.

The Tg is the value calculated by the equation below and converted to Celsius (°C) from absolute temperature (K).

$$1/Tg=\sum(w_i/Tg_i)$$

In the above equation, "$w_i$" indicates the mass fraction of monomer (i) of polymer (A), and $Tg_i$ indicates the glass transition temperature of the homopolymer of monomer (i) in polymer (A).

In the above equation, Tg and $Tg_i$ are values expressed in absolute temperature (K), and $Tg_i$ is the values shown in "Polymer Handbook, Fourth Edition".

The polymer (A) is preferred to be a chain polymer not having a crosslinked structure. A chain structure lowers the viscosity of a resin composition compared with those having a crosslinked structure.

(Method for producing polymer (A))

Production methods (α) and (β) below may be employed for producing a polymer (A).

Production method (α): a monomer component containing the monomer (m1) is polymerized.

Production method (β): a monomer component that includes monomer (m0) having an ethylenically unsaturated bond and a carboxyl group is polymerized to obtain a polymer (A0) having the carboxyl group, and the carboxyl group of the polymer (A0) is converted into a 1-(alkyloxy)ester group, 1-(alkylthio)ester group or 1-(dialkylamino)ester group.

Production method (α)

The monomer component used in production method (α) contains at least monomer (m1), and may further contain a monomer (m2).

The content of monomer (m1) in the monomer component is preferred to be 1 to 80 mass% of the sum of all of the monomers. Namely, polymer (A) is preferred to be obtained by polymerizing the monomer component containing monomer (m1) at 1 to 80 mass% (charged amount) of the sum of all of the monomers.

The content of monomer (m1) is more preferred to be 10 to 70 mass%, even more preferably 20 to 60 mass%.

When the content of monomer (m1) is at the above lower limit or greater, even better self-polishing properties are achieved for coating film. When the content of monomer (m1) is no greater than the above upper limit, the coating film exhibits an appropriate hydrolysis property, long-lasting self-polishing properties are maintained, and antifouling

effects are further enhanced.

When the monomer component includes an oxyethylene group-containing (meth)acrylate monomer, its content is preferred to be 1 to 80 mass%, more preferably 5 to 60 mass%, even more preferably 20 to 50 mass% of the sum of all of the monomers. When the content of the monomer is at the above lower limit or greater, the coating film exhibits a higher hydrophilic property, and the self-polishing properties are thereby further enhanced. When the content of the structural unit is no greater than the above upper limit, the coating film exhibits an appropriate hydrolysis property, the long-lasting self-polishing properties are maintained, and antifouling effects are further enhanced.

When the monomer component includes a monomer (m2) different from an oxyethylene group-containing (meth)acrylate monomer, the content of such a monomer is preferred to be 1 to 98 mass%, more preferably 10 to 98 mass%, even more preferably 10 to 80 mass% of the sum of all of the monomers.

The sum of monomer units (m1) and (m2) (including when no monomer (m2) is contained) is 100 mass%.

Monomers (m1) and (m2) may be commercially procured, or appropriately synthesized by using a known method.

A monomer (m1) can be synthesized by converting the carboxyl group of a monomer (m0) into a 1-(alkyloxy)ester group, 1-(alkylthio)ester group or 1-(dialkylamino)ester group.

Examples of monomer (m0) are (meth)acrylic acid, crotonic acid, isocrotonic acid, maleic acid, fumaric acid, itaconic acid, monomethyl maleate, monomethyl fumarate and the like.

To convert the carboxyl group of a monomer (m0) into a 1-(alkyloxy)ester group, 1-(alkylthio)ester group or 1-(dialkylamino)ester group, the monomer (m0) may be reacted (addition reactions) with a later-described compound (B).

A compound (B) is 1-alkenyl alkyl ether, 1-alkenyl alkyl sulfide, or 1-alkenyl dialkyl amine.

The reaction of a monomer (m0) and a compound (B) progresses under relatively mild conditions. For example, regardless of the presence of an acidic catalyst such as hydrochloric acid, sulfuric acid or phosphoric acid, a desired reactant is obtained by performing the reaction for 5 to 10 hours while maintaining the reaction temperature at 40 to 100°C.

After the reaction is completed, a desired monomer is collected through vacuum distillation under predetermined conditions.

<Compound (B)>

The compound (B) related to the present invention is 1-alkenyl alkyl ether, 1-alkenyl alkyl sulfide, or 1-alkenyl dialkyl amine. Namely, the compound (B) includes an ethylenically unsaturated bond and an ether oxygen atom, sulfide sulfur atom, or amine nitrogen atom bonded to one carbon atom of the ethylenically unsaturated bond. As for a compound (B), those represented by formula (31), (32) or (33) may be used. Those compounds may be used alone, or in combination thereof.

[Chemical Formula 9]

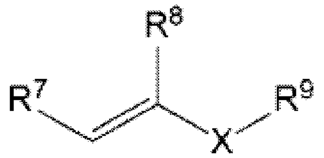

(31)

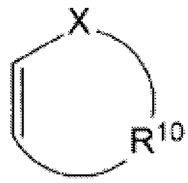

(32)

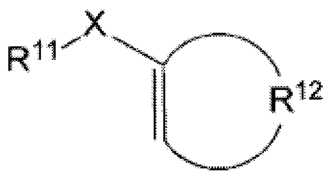

(33)

(In the above formulas, "X" is an ether oxygen atom, sulfide sulfur atom or amine nitrogen atom; $R^7$ is a hydrogen atom or a C1 to C9 alkyl group; $R^8$ is a hydrogen atom or a C1 to C10 alkyl group; $R^9$ and $R^{11}$ are a C1 to C20 alkyl, cycloalkyl or aryl group, which may or may not be substituted with at least one substituent selected from among cycloalkyl, aryl, alkoxy, alkanoyloxy and aralkyl groups; $R^{10}$ is a single bond, or a C1 to C9 alkylene group, which may or may not be substituted with at least one substituent selected from among cycloalkyl, aryl, alkoxy, alkanoyloxy and aralkyl groups; and $R^{12}$ is a C1 to C9 alkylene group, which may or may not be substituted with at least one substituent selected from among cycloalkyl, aryl, alkoxy, alkanoyloxy and aralkyl groups.)

If a compound represented by formula (31) is used as a compound (B), monomer (m1) is obtained as a compound where $R^1$, $R^2$, $R^3$ and "Z" in formula (11) correspond respectively to $CH_2R^7$, $R^8$, $R^9$ and (H).

In formula (31), the C1 to C9 alkyl group in $R^7$ is the same as the C1 to C10 alkyl group in $R^1$ except that the number of carbon atoms is 9 or less.

$R^8$ and $R^9$ are respectively the same as $R^2$ and $R^3$ in formula (11) above.

As for a compound represented by formula (31), examples of 1 -alkenyl alkyl ether are vinyl ethers such as alkyl vinyl ethers (for example, ethyl vinyl ether, butyl vinyl ether, isobutyl vinyl ether, t-butyl vinyl ether, and 2-ethyl hexyl vinyl ether), and cycloalkyl vinyl ethers (for example, cyclohexyl vinyl ether); 1-propenyl ethers such as ethyl-1-propenyl ether; and 1-butenyl ethers such as ethyl-1-butenyl ether. Examples of 1-alkenyl alkyl sulfide are 1-(ethenyl thio)ethane, 1-(ethenyl thio)propane, 1-(ethenyl thio)butane, 2-(ethenyl thio)butane, 1-(ethenyl thio)-2-methylpropane, 1-(propyl thio)-1-propene, 2-(propyl thio)-1-propene and the like. Examples of 1 -alkenyl dialkyl amine are N,N-dimethylethanamine, N-methyl-N-ethylethanamine, N,N-diethylethanamine, N-vinylpyrrolidine and the like.

Among those listed above, vinyl ethers and 1-propenyl ethers are preferred.

If a compound represented by formula (32) is used as a compound (B), monomer (m1) is obtained as a compound where $R^4$ and "Z" in formula (12) correspond respectively to CH-$R^{10}$ and (H).

In formula (32), the C1 to C9 alkylene group in $R^{10}$ is the same as $R^4$ except that the number of carbon atoms is 9 or less.

Examples of a compound represented by formula (32) are dihydrofurans such as 2,3-dihydrofuran and 5-methyl-2,3-dihydrofuran; dihydropyrans such as 3,4-dihydro-2H-pyran and 5,6-dihydro-4-methoxy-2H-pyran; dihydro thiophenes such as 2,3-dihydrothiophene; dihydro thiopyrans such as 3,4-dihydro-2H-thiopyran; dihydro pyrroles such as 2,3-dihydro-1-methylpyrrole; tetrahydropyridines such as 1,2,3,4-tetrahydro-1-methylpyridine; and the like.

If a compound represented by formula (33) is used as a compound (B), monomer (m1) is obtained as a compound where $R^5$, $R^6$ and "Z" in formula (13) correspond respectively to $R^{11}$, $R^{12}$, and (H)

In formula (33), $R^{11}$ is the same as $R^5$, and the C1 to C9 alkylene group in $R^{12}$ is the same as $R^6$ except that the number of carbon atoms is 9 or less.

Examples of a compound represented by formula (33) are 1-alkoxy-1-cycloalkylenes such as 1-methoxy-1-cyclopentene, 1-methoxy-1-cyclohexene, 1-methoxy-1-cycloheptene, 1-ethoxy-1-cyclopentene, 1-ethoxy-1-cyclohexene, 1-butoxy-1-cyclopentene and 1-butoxy-1-cyclohexene; substituent-containing 1-alkoxy-1-cycloalkylenes such as 1-ethoxy-3-methyl-1-cyclohexene; 1-(alkylthio)-1-cycloalkylenes such as 1-(methylthio)-1-cyclopentene and 1-(methylthio)-1-cyclohexene; 1-(1-pyrrolidinyl)-1-cycloalkylenes such as 1-(1-pyrrolidinyl)-1-cyclopentene and 1-(1-pyrrolidinyl)-1-cyclohexene; and the like.

The compound (B) is a material used for converting a carboxyl group to a 1-(alkyloxy)ester group, 1-(alkylthio)ester group or 1-(dialkyl amino)ester group. When a carboxylic acid and a compound (B) undergo addition reactions, the carboxylic acid is blocked, resulting in a 1-(alkyloxy)ester group, 1-(alkylthio)ester group or 1-(dialkyl amino)ester group.

Compounds (B) may be commercially procured, or appropriately synthesized.

Subsequent to the polymerization of a monomer as the material for a polymer (A), or after a polymer (A) is formed by polymerizing a monomer as the material for a polymer (A) through a conventional method such as suspension, emulsion, solution polymerization or the like, the polymer (A) may be obtained as an unreacted compound where a compound (B) is added in an amount exceeding the equivalent amount for reaction. The polymer (A) may also be obtained as an unreacted compound where a compound (B) is added in an amount exceeding the equivalent amount for a reaction simultaneously performed with polymerization by mixing a carboxyl group-containing ethylenically unsaturated monomer (for example, (meth)acrylic acid), another ethylenically unsaturated monomer, and compound (B). In other words, as long as a compound (B) is ultimately present in polymer (A), the timing of adding a compound (B) is not the issue. However, if a compound (B) is present during a polymerization reaction, since a certain amount of the compound (B) undergoes radical polymerization, adding a desired amount of compound (B) after the completion of polymerization is preferred.

[Content of Compound (B)]

When the content of compound (B) in a resin composition is set to be at least 1 mol per 100 mol of the sum of l-(alkyloxy)ester group, l-(alkylthio)ester group or 1-(dialkyl amino)ester group in the polymer (A), storage stability is enhanced, crack resistance is excellent, and dissolution stability is improved. The content is preferred to be at least 5 mol, more preferably at least 12 mol, even more preferably at least 20 mol, especially preferably at least 40 mol. In addition, by keeping the content at 1000 mol or less, preferably 800 mol or less, weatherability and the physical properties of the coating film are maintained well.

Production method (β)

In production method (β), the monomer component containing monomer (m0) is first polymerized to obtain a polymer (A0) having a carboxyl group. The monomer component may further contain a monomer (m2).

Monomers (m0) and (m2) are the same as those described above.

The preferred content of monomer (m0) in the monomer component is the same as that for monomer (m1) in the monomer component in production method ($\alpha$).

The preferred contents of an oxyethylene group-containing (meth)acrylate monomer and other monomer (m2) are the same as those described above.

To polymerize the monomer component, those employed in production method ($\alpha$) may also be used.

Next, the carboxyl group of polymer (m0) is converted to a 1-(alkyloxy)ester group, 1 -(alkylthio)ester group or 1 -(dialkyl amino)ester group to obtain polymer (A).

To convert the carboxyl group of polymer (A0) to a 1-(alkyloxy)ester group, 1-(alkylthio)ester group or 1-(dialkyl amino)ester group, the polymer (A0) and a compound (B) are subjected to reactions (addition reactions), for example.

Examples of a compound (B) are the same as those listed above.

Reaction of polymer (A0) and compound (B) is conducted the same as that of monomer (m0) and compound (B).

[Method for Producing Polymer (A)]

The polymer (A) related to the present invention is produced by using the monomers listed above. Any known polymerization methods such as solution, suspension, block, and emulsion polymerization methods may be employed. Considering productivity and properties of coating film, solution polymerization is preferred. Solution polymerization is conducted by a known method using a known polymerization initiator.

The polymer (A) is produced by reacting a monomer mixture of the above monomers in the presence of a radical polymerization initiator under a reaction temperature of 60 to 120°C for 4 to 14 hours. Examples of a radical polymerization initiator are 2,2-azobisisobutyronitrile, 2,2-azobis(2,4-dimethylvaleronitrile), 2,2-azobis(2-methylbutyronitrile), peroxide benzoyl, cumene hydroperoxide, lauroyl peroxide, di-t-butyl peroxide, t-butyl peroxy-2-ethylhexanoate and the like. If applicable, a known chain transfer agent may be added. Examples of a chain transfer agent are mercaptans such as n-dodecyl mercaptan, thioglycolic acid esters such as octyl thioglycolate, $\alpha$-methyl styrene dimer, terpinolene and the like. In addition, it is an option to use generic organic solvents such as toluene, xylene, methyl isobutyl ketone and n-butyl acetate.

The content of polymer (A) in the resin composition related to the present invention is preferred to be at least 57 mass%, more preferably at least 59 mass%, even more preferably at least 61 mass%, of the entire content of the resin composition. When the content of polymer (A) is at least the lower limit of such a range, the relative amount of a solvent is less, thus reducing the VOC content in the antifouling coating composition when an antifouling agent is incorporated into the resin composition.

The upper limit of polymer (A) is determined according to the weight-average molecular weight of polymer (A), its glass transition temperature, presence of crosslinked structure or the like, and it is preferred to be 85 mass% or less, more preferably 75 mass% or less so as to set the viscosity of the resin composition to be lower than 2,000 mPa•s.

<Solvent>

A solvent is not limited specifically as long as it dissolves the polymer (A). Examples are hydrocarbon-based solvents such as toluene and xylene; ketone-based solvents such as methyl isobutyl ketone; ester-based solvents such as n-butyl acetate, propylene glycol monomethyl ether acetate and ethyl 3-ethoxy propionate; and the like. They may be used alone or in combination thereof.

The lower limit of a solvent is determined according to the weight-average molecular weight of polymer (A), its glass transition temperature, presence of crosslinked structure or the like, and is preferred to be at least 15 mass%, more preferably at least 25 mass%, so that the viscosity of the resin composition is lower than 2,000 mPa•s.

<Other Components>

The resin composition related to the present invention may further include components other than a polymer (A).

Examples of other components are the same as those in the later-described antifouling coating composition.

The content of other components is preferred to be 200 mass% or less of polymer (A), and the content may even be zero mass%.

In addition, to enhance storage stability, it contains at least one kind of additive selected from among compounds reactable with acids, acidic compound, and basic compounds.

When the storage stability of a resin that contains a 1-(alkyloxy)ester group, 1-(alkylthio)ester group or 1-(dialkyl amino)ester group is lowered, probable reasons are an increase in Tg caused by a carboxylic acid produced by unwanted decomposition of such a group in the resin or the coating composition, and an increase in viscosity of the resin or the coating composition caused by crosslinking of such a group with the component in the coating composition. Also, dissolution stability and water resistance may be lowered when free carboxylic acids are produced. In addition, the

produced carboxylic acid works as an acidic catalyst to progress hydrolysis reactions, and decomposition is thereby accelerated. Therefore, when a compound reactable with acid is added, the compound traps the produced carboxylic acid, thus improving storage stability. Examples of compounds reactable with acid are basic compounds, epoxy group-containing compounds, compound (B) and the like.

Examples of a basic compound are dimethyl amine, diethyl amine, trimethyl amine, triethyl amine, aniline, pyridine, and the like. Examples of an epoxy group-containing compound are 2-ethyl oxirane, 2,3-dimethyloxirane, 2,2-dimethyloxirane, glycidyl (meth)acrylate, glycidyl $\alpha$-ethyl acrylate, 3,4-epoxy butyl (meth)acrylate, and the like. As for a compound (B), those described above in formula (31), (32) or (33) may be used. The content of compound (B) in the resin composition is preferred to be in the range described above.

As for the compound reactable with acid, a compound (B) is preferred, more preferably 1-alkenyl alkyl ether, from the viewpoint of storage stability. By incorporating 1-alkenyl alkyl ether, excellent crack resistance and dissolution stability are achieved.

Moreover, since decomposition of a 1-(alkyloxy)ester group, 1-(alkylthio)ester group or 1-(dialkyl amino)ester group is accelerated in a high pH or low pH region, or reactivity of compound (B) and a carboxylic acid is lowered in a high pH region, storage stability decreases. To improve storage stability, a basic compound or an acidic compound is preferred to be added in an amount to set the pH in water to be 2 to 12, more preferably 6 to 9. By so doing, the pH is adjusted for the resin composition and coating composition.

Preferred examples of a basic compound are those listed above. Examples of an acidic compound are abietic acid, neoabietic acid, palustric acid, pimaric acid, isopimaric acid, levopimaric acid, dextropimaric acid, sandaracopimaric acid, acetic acid, propionic acid, butyric acid, lauric acid, stearic acid, linoleic acid, oleic acid, chloroacetic acid, fluoroacetic acid, and the like.

<Decomposition Rate of Structure Represented by Formula (1), (2) or (3) in Polymer (A) after Being Stored at 40°C for 30 days>

When the structure represented by formula (1), (2) or (3) in polymer (A) is set to have a decomposition rate of 20% or lower after the composition is stored at 40°C for 30 days, storage stability and dissolution stability are provided for the resin composition or antifouling coating composition.

The decomposition rate is preferred to be 7% or lower, more preferably 4% or lower, even more preferably 3% or lower, especially preferably 2% or lower.

The decomposition rate of the structure represented by formula (1), (2) or (3) is defined as shown in the equation below: the theoretical solid acid value (b), obtained by assuming no structure in (1), (2) or (3) is decomposed, is subtracted from the measured solid acid value (a), and the resultant value is divided by theoretical solid acid value (c), obtained by assuming the entire structure in formula (1), (2) or (3) contained in a sample is decomposed.

$$\text{(decomposition rate)} = \{(\text{measured solid acid value (a)}) - (\text{theoretical solid acid value (b)})\} / (\text{theoretical solid acid value (c)}) \times 100$$

Measured solid acid values are described later under the header of measuring acid value. Theoretical solid acid values are obtained by the following equation.

$$\text{(theoretical solid value)}=\sum(561*100/Mwi*wi)$$

In the above equation, "wi" is the mass fraction of acidic functional group-containing monomer (i) of a copolymer (A), and "Mwi" indicates the molecular weight of the acidic functional group-containing monomer.

When the structure is decomposed, the acidic value is calculated as a monomer having an acidic functional group.

When the structure is not decomposed, the acidic value is calculated as a monomer without any acidic functional group.

<Viscosity>

The viscosity of a resin composition related to the present invention is preferred to be lower than 2,000 mPa•s, more preferably 1,000 mPa•s, even more preferably 600 mPa•s, when determined at 25°C using a Brookfield viscometer.

When the viscosity of a resin composition is no higher than the above upper limit, since an antifouling agent is incorporated without adding a dilution solvent to the resin composition, a low-VOC antifouling coating composition is obtained.

The lower limit of the viscosity of the resin composition is not limited specifically, but 100 mPa•s or higher is preferred when the physical properties of coating film are considered.

The viscosity of a resin composition is adjustable by controlling its solid amount (content of polymer (A) and other components), weight-average molecular weight of polymer (A), glass transition temperature, presence of crosslinked structure or the like. For example, when the solid amount, especially the content of polymer (A), is less, the resin composition tends to have a lower viscosity. Also, a lower weight-average molecular weight of polymer (A), or a lower glass transition temperature, is more likely to set a lower viscosity.

The resin composition of the present invention is prepared by using a known method; for example, a polymer (A) is synthesized using the aforementioned production method ($\alpha$) or ($\beta$), and the obtained polymer (A) is mixed with a solvent and other components as required.

At that time, other components are preferred to be added so that the content of polymer (A) in the resin composition is at least 57 mass% (more preferably at least 59 mass%), and that the viscosity of the resin composition is lower than 2,000 mPa•s (more preferably lower than 1,000 mPa•s). When the viscosity is lower than 2,000 mPa•s, an antifouling agent or the like is incorporated well into the resin composition without further adding a solvent for forming an antifouling coating composition. As a result, the antifouling coating composition has a lower content of VOC (for example, 410 g/L or less).

The resin composition related to the present invention is used for forming an antifouling coating composition, and for an anti-fogging coating composition or the like as well.

[Antifouling Coating Composition]

An antifouling coating composition related to the present invention contains the aforementioned resin composition related to the present invention and an antifouling agent.

The antifouling coating composition may further contain other components in addition to a polymer (A) and an antifouling agent. The other components may be those derived from the resin composition of the present invention or may be something else (such as those incorporated during the production of an antifouling coating composition).

The antifouling coating composition related to the present invention may contain a solvent that is not derived from the resin composition.

<Antifouling Agent>

As for antifouling agents, those available are inorganic, organic or the like, and one type or two or more types are appropriately selected for use according to desired properties.

Examples are copper-based antifouling agents such as cuprous oxide, thiocyanate copper and copper powder; compounds of other metals (lead, zinc, nickel, etc.); amine derivatives such as diphenylamine; other compounds such as nitrile compounds, benzothiazole compounds, maleimide compounds and pyridine compounds; and so on. They may be used alone or in combination thereof.

More specific examples of antifouling agents are 4-bromo-2-(4-chlorophenyl)-5-(trifluoromethyl)-1H-pyrrole-3-carbonitrile, manganese ethylenebis dithiocarbamate, zinc dimethyldithiocarbamate carbamate, 2-methylthio-4-t-butylamino-6-cyclopropylamino-s-triazine, 2,4,5,6-tetrachloroisophthalonitrile, N,N-dimethyl dichlorophenyl urea, zinc ethylene bis-dithiocarbamate, copper rhodanide, 4,5-dichloro-2-n-octyl-3(2H)-isothiazolone, N-(fluorodichloromethylthio thio) phthalimide, N,N'-dimethyl-N'-phenyl-(N-fluorodichloromethylthio thio)sulfamide, 2-pyridinethiol-1-oxide zinc salt, tetramethylthiuram disulfide, Cu-10%Ni solid solution alloy, 2,4,6-trichlorophenyl maleimide, 2,3,5,6-tetrachloro-4-(methylsulfonyl)pyridine, 3-iodo-2-propynyl butylcarbamate, diiodomethyl-p-tolyl sulfone, bisdimethyl dithiocarbamoyl zinc ethylene bisdithiocarbamate, phenyl(bispyridyl)bismuth dichloride, 2-(4-thiazolyl)-benzimidazole, medetomidine, pyridine-triphenylborane, and the like.

Among those listed above, it is preferred to include at least one type selected from among cuprous oxide, 4-bromo-2-(4-chlorophenyl)-5-(trifluoromethyl)-1H-pyrrole-3-carbonitrile (hereinafter also referred to as "antifouling agent (1)") and medetomidine.

When cuprous oxide and antifouling agent (1) are used together, the ratio (mass ratio) is preferred to be cuprous oxide / antifouling agent (1) = 80/20 to 99/1, more preferably 90/10 to 99/1.

It is also an option to combine another antifouling agent with either or both of cuprous oxide and antifouling agent (1).

The amount of antifouling agent in an antifouling coating composition is not limited specifically, but it is preferred to be 10 to 200 parts by mass, more preferably 50 to 150 parts by mass, per 100 parts by mass of polymer (A). When the content of the antifouling agent is at least the above lower limit, the coating film exhibits further excellent antifouling

effects, and when the content is no greater than the above upper limit, the physical properties of coating film are excellent.

<Other Components>

Other components in the antifouling coating composition may be another resin different from polymer (A), for example.

The other resin does not contain a functional group (I), and it is a thermoplastic resin, for example.

The antifouling coating composition related to the present invention is preferred to contain a thermoplastic resin. When prepared with a thermoplastic resin, physical properties of the coating film such as crack resistance and water resistance are enhanced.

Examples of a thermoplastic resin are chlorinated paraffins; chlorinated polyolefins such as chlorinated rubber, chlorinated polyethylene and chlorinated polypropylene; polyvinyl ether; polypropylene sebacate; partially hydrogenated terphenyl; and polyvinyl acetate; alkyl poly(meth)acrylates such as methyl (meth)acrylate copolymers, ethyl (meth)acrylate copolymers, propyl (meth)acrylate copolymers, butyl (meth)acrylate copolymers and cyclohexyl (meth)acrylate copolymers; polyether polyol; alkyd resins; polyester resins; vinyl chloride resins such as vinyl chloride-vinyl acetate copolymers vinyl chloride-vinyl propionate copolymers vinyl chloride-isobutyl vinyl ether copolymers vinyl chloride-isopropyl vinyl ether copolymers and vinyl chloride-ethyl vinyl ether copolymers; silicone oil; waxes; fats solid at room temperature other than waxes; fats and oils liquid at room temperature such as castor oil and their purified products; vaselines; liquid paraffin; rosin, hydrogenated rosin; naphthenic acid, fatty acids and their divalent metal salts; and the like. Examples of waxes are animal origin waxes such as beeswax; plant origin waxes; semisynthetic waxes such as amide waxes; synthetic waxes such as polyethylene waxes and oxidized polyethylene waxes. Those thermoplastic resins may be used alone or in combination thereof.

Among those listed above, chlorinated paraffin is preferred since it works as a plasticizer and contributes to enhancing crack resistance and peel resistance of the coating film.

As for anti-settling agents and anti-sagging agents that contribute to enhancing the storage stability and pigment dispersibility of antifouling coating compositions, it is preferred to use organic waxes such as semisynthetic waxes and synthetic waxes, more preferably a polyethylene wax, oxidized polyethylene wax or polyamide wax.

The amount of a thermoplastic resin in an antifouling coating composition is not limited specifically, but it is preferred to be 0.1 to 50 parts by mass, more preferably 0.1 to 10 parts by mass, per 100 parts by mass of polymer (A). When the content of a thermoplastic resin is at least the above lower limit, physical properties such as crack resistance and water resistance for the coating film are enhanced, and when the content is no greater than the above upper limit, the hydrolysis property is even better.

The antifouling coating composition related to the present invention may include silicon compounds such as dimethylpolysiloxane and silicone oil, or fluorine-containing compounds such as fluorinated hydrogen carbon and the like to provide lubricity on the coating film surface and to prevent attachment of living organisms. Examples of silicone oil are "KF96" (Shin-Etsu Chemical Co., Ltd.), "SH200" (Dow Corning Toray Co., Ltd.), "TSF451" (Toshiba Silicones Co., Ltd.), "DC200" (Dow Corning Corporation), "Fluid 47" (Rhone-Poulenc S.A., France), "KF50, KF54" (Shin-Etsu Chemical), "SH510, SH550, SH710" (Dow Corning Toray), and the like.

The antifouling coating composition related to the present invention may further include various types of pigment, dewatering agents, defoaming agents, leveling agents, pigment dispersing agents (for example, anti-settling agents), anti-sagging agents, matting agents, ultraviolet absorbers, antioxidants, heat-resistance improvers, slip agents, preservatives, plasticizers, viscosity control agents and the like.

As for the pigment, zinc oxide, talc, silica, barium sulfate, potash feldspar, aluminum hydroxide, magnesium carbonate, mica, carbon black, red iron oxide, titanium oxide, phthalocyanine blue, kaolin, gypsum and the like may be used. In particular, zinc oxide and talc are preferred.

As the dewatering agent, silicate-based, isocyanate-based and orthoester-based dewatering agents, inorganic dewatering agents and the like may be used. More specifically, methyl orthoformate, ethyl orthoformate, methyl orthoacetate, orthoboric ester, tetraethyl orthosilicate, anhydrous gypsum, calcined gypsum, synthetic zeolite (molecular sieve), and the like may be used. Moisture is trapped by incorporating a dewatering agent in the antifouling coating composition, thus enhancing its storage stability.

As for an anti-settling agent and anti-sagging agent, instead of using thermoplastic resins, bentonite, fine silica, stearate salt, lecithin salt, alkyl sulfonic acid salts and the like may be used. Examples of a plasticizer other than thermoplastic resins are phthalic acid ester plasticizers such as dioctyl phthalate, dimethyl phthalate, dicyclohexyl phthalate and diisodecyl phthalate; aliphatic dibasic acid ester plasticizers such as isobutyl adipate and dibutyl sebacate; glycol ester plasticizers such as diethylene glycol dibenzoate and pentaerythritol alkyl esters; phosphoric acid ester plasticizers such as tricresyl phosphate (TCP), triaryl phosphate and trichloroethyl phosphate; epoxy plasticizers such as epoxy soybean oil and octyl epoxy stearate; organic tin-based plasticizers such as dioctyltin laurate and dibutyltin laurate; trioctyl trimellitate, triacetylene, and the like. By incorporating a plasticizer in the antifouling coating composition,

crack resistance and peel resistance of the coating film are enhanced. Among the plasticizers above, TCP is preferred.

<Change in Viscosity of Coating Composition after 90 Days>

From the viewpoint of storage stability, change in the viscosity of a coating composition is preferred to be 2,000% or lower, more preferably 1,000% or lower, even more preferably 400% or lower, especially preferably 200% or lower, when determined by using a Brookfield viscometer after storing at 40°C for 90 days.

<VOC Content>

The VOC in the antifouling coating composition related to the present invention is preferred to be 410 g/L or less, more preferably 400 g/L or less, even more preferably 380 g/L or less.

The VOC content is obtained from the equation below using the values of specific gravity of an antifouling coating composition and nonvolatile content.

$$\text{VOC content (g/L)} = \text{specific gravity of composition} \times 1000 \times (100\text{-nonvolatile content}) / 100$$

The specific gravity and nonvolatile content of an antifouling coating composition are determined by the methods described later in the examples.

The VOC content is adjustable by modifying the amount of solvent.

<Viscosity>

The viscosity of an antifouling coating composition related to the present invention is preferred to be lower than 3,000 mPa•s, more preferably lower than 2,000 mPa•s, even more preferably lower than 1,500 mPa•s. When the viscosity of the antifouling coating composition is no higher than the above upper limit, it is easier to apply the coating composition.

The lower limit is not set specifically, but 100 mPa•s or higher is preferable considering the physical properties of coating film.

The viscosity of an antifouling coating composition is adjusted by modifying the viscosity of the resin composition, the amount of solvent in the resin composition and the like.

The antifouling coating composition related to the present invention is prepared by adding an antifouling agent, and other components and solvents as desired, to the resin composition related to the present invention.

The antifouling coating composition related to the present invention is used to form coating film (antifouling coating film) on substrate surfaces of ships, various fishing nets, port facilities, oil fences, bridges, and underwater structures such as submarine bases.

To form coating film, the antifouling coating composition may be applied directly on the substrate surface or on the undercoating film formed on the substrate.

Examples of undercoating are wash primers, chloride rubber-based and epoxy-based primers, intermediate coatings and the like.

Any known method may be used for forming coating film. For example, the antifouling coating composition is applied on the substrate surface or on the undercoating on the substrate by using a brush, spray or roller, or by submerging the substrate in the composition. The coating film is then dried.

The amount of antifouling coating composition to be applied is generally set to make a 10 to 400 μm thick coating film when dried.

The coating film is dried at room temperature, but heat may be applied if necessary.

EXMAPLES

In the following, the present invention is described in further detail by referring to Examples and Comparative Examples. However, the present invention is not limited to those examples. The parts in examples refer to parts by mass. In addition, the content of a monomer-derived structural unit having the structure represented by formula (1), (2) or (3) contained in a polymer (A) was determined from the charged amount of a monomer as the material, assuming that the entire monomer is polymerized. The examples were evaluated based on methods shown below.

[Measuring Acid Value]

In a beaker, approximately 4.0 grams of a sample (A (g)) was weighed, into which 50 mL of a solution containing toluene and 95% ethanol at a ratio of 50/50 was added. The mixture was put into an airtight container and stirred for 5 minutes. A Hiranuma automatic titrator (AutoTitrator COM-1600) was used to perform potentiometric titration with a 0.5 mol/L potassium hydroxide solution (ethanol solution), made by Kishida Chemical Co., Ltd., having a factor (f) of 1.003 at 20°C. The end point was set at the maximum inclination point of the titration curve (titration volume = B (mL), titer of the KOH solution = f). In the meantime, the same procedure was conducted on a blank sample (titration volume = C (mL)), and the acid value was calculated by the following equation.

$$\text{solid acid value (mg KOH/g)} = \{(B\text{-}C)\times 0.5\times 56.11\times f\}/A/\text{solid component}$$

[Brookfield Viscosity]

A sample was charged into a 150 mL glass bottle and immersed for at least 2 hours in a thermobath with a controlled temperature of 25.0±0.1°C so as to keep the sample at a constant temperature. The viscosity was measured using Viscometer TVB-10, made by Toki Sangyo Co., Ltd., at a rotation speed of 60 rpm using a selected rotor.

[Nonvolatile Content (Solid Component)]

In an aluminum dish, 0.50 grams of a sample (resin composition or antifouling coating composition) was weighed, and 3 mL of toluene was added using a dropper to evenly spread the composition on the dish bottom so as to preliminarily dry the sample. Preliminary drying was conducted to spread the sample evenly on the dish so that the sample would evaporate more easily during the final drying. During preliminary drying, the sample and toluene were heated and dissolved in the dish on a 70 to 80°C water bath to dry the sample through evaporation. Then, final drying was conducted on the sample for 2 hours by using a 105°C hot air blower. The nonvolatile content (solid component) was calculated from the mass of sample prior to preliminary drying (pre-drying mass) and the mass after final drying (post-drying mass) using the following equation.

$$\text{nonvolatile content (mass\%)} = \text{post-drying mass/pre-drying mass}\times 100$$

[Gardner Viscosity]

A sample was filled to the indicator line of a dry viscometer tube, which was then plugged with a cork. The tube with the sample was immersed vertically for at least 2 hours in a thermobath with a controlled temperature (25.0±0.1°C) so as to keep the sample at a constant temperature. A reference tube and the sample tube were simultaneously rotated 180 degrees, and the rising speeds of bubbles in both tubes were compared to determine the viscosity.

[Weight-average Molecular Weight (Mw), Number-average Molecular Weight (Mn)]

Mw and Mn were determined by gel permeation chromatography (GPC) (HLC-8220, made by Tosoh Corporation) using dimethylformamide (DMF) with 20 mM LiBr as the eluent. Also used were TSKgel α-M (7.8 mm×30 cm, made by Tosoh) and TSK guard column (6.0 mm×4 cm, made by Tosoh). To prepare calibration curves, F288/F1/F28/F80/F40/F2/A1000 (standard polystyrenes, made by Tosoh) and styrene monomers were used.

[Specific Gravity]

An antifouling coating composition was filled in a 100 mL specific-gravity cup to determine its mass at 25°C so that its specific gravity was calculated.

[Storage Stability Test]

A resin composition or an antifouling coating composition was filled into a 150 mL glass bottle to determine its viscosity by the aforementioned Brookfield viscometer directly after each composition was prepared and after each composition was stored for 30 days and 90 days in a thermobath set to have a temperature of 40°C. Then, the rate of

change in viscosity was calculated for each resin composition and coating composition.

[VOC Content]

Using the values of specific gravity and nonvolatile content of an antifouling composition, the VOC content of the antifouling coating composition was calculated using the equation below.

$$\text{VOC content (g/L)} = \text{specific gravity of composition} \times 1000 \times (100\text{-nonvolatile content}) / 100$$

[Static Antifouling Performance]

A sample plate was prepared by coating an antifouling coating composition with a brush to have a dry film thickness of 120 μm on a 150 mm×70 mm×1.6 mm (thickness) sandblasted steel plate, on which an anticorrosion coating was applied in advance. The sample plate was immersed in seawater and kept there for 6 months. Then, the ratio of the area where marine organisms were attached (marine organism attached area) to the entire area of the coating film was obtained, and the static antifouling performance of the coating film was evaluated based on the following criteria.

A: the marine organism attached area is 10% or lower.
B: the marine organism attached area is above 10% but 20% or lower.
C: the marine organism attached area is above 20% but 40% or lower.
D: the marine organism attached area is above 40%.

[Coating Film Consumption Rate Test]

A sample plate was prepared by coating with an applicator an antifouling composition to have a dry film thickness of 120 μm on a 50 mm×50 mm×2 mm (thickness) hard vinyl-chloride plate. When the sample plate was dried, it was mounted on a rotating drum set to be immersed in seawater. The sample plate on the drum was rotated at a peripheral speed of 7.7 m/s (15 knots). The film thickness was measured after 3 months and 6 months, and from each measured thickness, the consumed film thickness was calculated (120 μm minus measured thickness (μm)).

[Water Resistance Test]

A sample plate was prepared by coating an antifouling composition to have a dry film thickness of 120 μm on a glass substrate. The sample plate was immersed in filtered sterile seawater for a month, and dried for a week at a room temperature of 20°C. The coating film surface was observed and evaluated based on the following criteria.

A: absolutely no cracking or peeling is observed.
B: cracking is observed in some portions.
C: cracking and peeling are observed in some portions.
D: cracking and peeling are observed on the entire surface.

[Production Example M1: (m1)]

A mixture was prepared with 150.2 parts (1.5 mol) of butyl vinyl ether, 0.24 parts of hydroquinone, and 0.47 parts of phenothiazine, and homogeneously stirred at room temperature. Under air flow (10mL/min.), 86.1 parts (1.0 mol) of methacrylic acid was dropped while the temperature of the reaction mixture was kept at 60°C or lower. After the dropping was completed, the temperature of the reaction mixture was raised to 80°C, and the mixture underwent a reaction for 5 hours. Next, 264.5 parts (3.0 mol) of t-butyl methyl ether was mixed into the reaction mixture, and the organic phase was extracted once with 350 parts of a 20 mass% potassium carbonate solution. Then, 0.06 parts of 4-benzyloxy-2,2,6,6-tetramethylpiperidine-N-oxyl was added to the organic phase, and the low volatile content was distilled using an evaporator. After the residue was vacuum distilled, 166.9 parts (0.91 mol) of 1-butoxyethyl methacrylate (m1) with a boiling point of 70°C/5 torr was obtained.

[Production Example M2: (m2)]

A mixture was prepared with 90.1 parts (0.9 mol) of isobutyl vinyl ether, 0.14 parts of hydroquinone, and 0.28 parts of phenothiazine, and homogeneously stirred at room temperature. Under air flow (10mL/min.), 51.7 parts (0.6 mol) of methacrylic acid was dropped while the temperature of the reaction mixture was kept at 60°C or lower. After the dropping was completed, the temperature of the reaction mixture was raised to 80°C, and the mixture underwent a reaction for 6 hours. Next, 158.7 parts (1.8 mol) of t-butyl methyl ether was mixed into the reaction mixture, and the organic phase was extracted once with 200 parts of a 20 mass% potassium carbonate solution. Then, 0.03 parts of 4-benzyloxy-2,2,6,6-tetramethylpiperidine-N-oxyl was added to the organic phase, and the low volatile content was distilled using an evaporator. After the residue was vacuum distilled, 97.5 parts (0.52 mol) of 1-isobutoxyethyl methacrylate (m2) with a boiling point of 60°C/3 torr was obtained.

[Production Example M3: (m3)]

A mixture was prepared with 138.8 parts (1.1 mol) of cyclohexyl vinyl ether, 0.28 parts of hydroquinone, and 0.53 parts of phenothiazine, and homogeneously stirred at room temperature. Under air flow (10mL/min.), 86.1 parts (1.0 mol) of methacrylic acid was dropped while the temperature of the reaction mixture was kept at 60°C or lower. After the dropping was completed, the temperature of the reaction mixture was raised to 80°C, and the mixture underwent a reaction for 5 hours. Next, 220.4 parts (2.5 mol) of t-butyl methyl ether was mixed into the reaction mixture, and the organic phase was extracted once with 135 parts of a 20 mass% potassium carbonate solution. Then, 0.06 parts of 4-benzyloxy-2,2,6,6-tetramethylpiperidin-N-oxyl was added to the organic phase, and the low volatile content was distilled using an evaporator. After the residue was vacuum distilled, 160.0 parts (0.75 mol) of 1-(cyclohexyl oxy)ethyl methacrylate (m3) with a boiling point of 92°C/5 torr was obtained.

[Production Example M4: (m4)]

A mixture was prepared with 171.9 parts (1.1 mol) of 2-ethylhexyl vinyl ether, 0.32 parts of hydroquinone, and 0.61 parts of phenothiazine, and homogeneously stirred at room temperature. Under air flow (10mL/min.), 86.1 parts (1.0 mol) of methacrylic acid was dropped while the temperature of the reaction mixture was kept at 60°C or lower. After the dropping was completed, the temperature of the reaction mixture was raised to 80°C, and the mixture underwent a reaction for 5 hours. Next, 264.5 parts (3.0 mol) of t-butyl methyl ether was mixed into the reaction mixture, and the organic phase was extracted once with 135 parts of a 20 mass% potassium carbonate solution. Then, 0.07 parts of 4-benzyloxy-2,2,6,6-tetramethylpiperidine-N-oxyl was added to the organic phase, and the low volatile content was distilled using an evaporator. After the residue was vacuum distilled, 207.0 parts (0.85 mol) of 1-(2-ethylhexyloxy)ethyl methacryate (m4) with a boiling point of 99°C/3 torr was obtained.

[Production Example M5: (m5)]

A mixture was prepared with 75.7 parts (0.9 mol) of 3,4-dihydro-2H-pyran, 0.13 parts of hydroquinone, and 0.26 parts of phenothiazine, and homogeneously stirred at room temperature. Under air flow (10mL/min.), 51.7 parts (0.6 mol) of methacrylic acid (MAA) was dropped while the temperature of the reaction mixture was kept at 60°C or lower. After the dropping was completed, the temperature of the reaction mixture was raised to 80°C, and the mixture underwent a reaction for 12 hours. Next, 158.7 parts (1.8 mol) of t-butyl methyl ether was mixed into the reaction mixture, and the organic phase was extracted once with 200 parts of a 20 mass% potassium carbonate solution. Then, 0.03 parts of 4-benzyloxy-2,2,6,6-tetramethylpiperidin-N-oxyl was added to the organic phase, and the low volatile content was distilled using an evaporator. After the residue was vacuum distilled, 75.7 parts (0.44 mol) of 2-tetrahydropyranyl methacrylate (m5) with a boiling point of 76°C/3 torr was obtained.

[Production Example M6: (m6)]

A mixture was prepared with 64.9 parts (0.9 mol) of ethyl vinyl ether, 0.12 parts of hydroquinone, and 0.24 parts of phenothiazine, and homogeneously stirred at room temperature. Under air flow (10mL/min.), 51.7 parts (0.6 mol) of methacrylic acid was dropped while the temperature of the reaction mixture was kept at 30°C or lower. After the dropping was completed, the mixture was kept at room temperature and subjected to a reaction for 4 hours. Next, 158.7 parts (1.8 mol) of t-butyl methyl ether was mixed into the reaction mixture, and the organic phase was extracted once with 160 parts of a 20 mass% potassium carbonate solution. Then, 0.05 parts of 4-benzyloxy-2,2,6,6-tetramethylpiperidine-N-oxyl was added to the organic phase, and the low volatile content was distilled using an evaporator. After the residue was vacuum distilled, 68.2 parts (0.43 mol) of 1-ethoxyethyl methacrylate (m6) with a boiling point of 43°C/3 torr

was obtained.

[Production Example B-1]

In a reaction vessel equipped with a stirrer, temperature adjuster and dropping system, 75 parts of xylene was charged, and the temperature was raised to 85°C while the content was stirred. Next, 10.0 parts of methyl acrylate, 40.0 parts of methoxyethyl methacrylate, 50.0 parts of 1-butoxyethyl methacrylate prepared in production example MI, and 1.3 parts of AIBN were mixed, and the mixture was dropped out in 4 hours at a constant rate. After the dropping was completed, 0.5 parts of t-butyl peroxy octoate and 2 parts of xylene were dropped four times at an interval of 30 minutes and were further stirred for an hour. Then, 7.3 parts of butyl vinyl ether, 6.7 parts of xylene, and 3 parts of butyl acetate were added. Accordingly, resin composition (B-1) containing (co)polymer (A-1) with a solid content of 50.2% and a Gardner viscosity of G was obtained. Regarding resin composition (B-1), its decomposition rate at 40°C after 30 days, number-average molecular weight (Mn) and weight-average molecular weight (mw) are shown in Tables 1 and 2.

Examples B-8 and B-9 and the corresponding antifouling compositions are according the invention. All other examples are reference or comparative examples.

[Production Examples B-2 to B-16, B-18, B-19]

Resin compositions (B-2 to B-16, B-18 and B-19) were prepared the same as resin composition (B-1) except for the charged amounts respectively specified in Tables 1 and 2. For each of the obtained resin compositions (B-2 to B-16, B-18 and B-19), the solid component (mass%), Gardner viscosity, decomposition rate after storage at 40°C for 30 days, number-average molecular weight (Mn) and weight-average molecular weight (mw) are shown in Tables 1 and 2.

[Production Example B-17]

In a reaction vessel equipped with a stirrer, temperature adjuster and dropping system, 44.4 parts of propylene glycol monomethyl ether acetate was charged, and the temperature was raised to 85°C while the content was stirred. Next, 17.5 parts of methyl acrylate, 20.0 parts of ethyl acrylate, 37.5 parts of 2-methoxyethyl methacrylate, 11.6 parts of methacrylic acid and 1.5 parts of AIBN were mixed, and the mixture was dropped out in 4 hours at a constant rate. After the dropping was completed, 0.5 parts of t-butyl peroxy octoate and 0.5 parts of propylene glycol monomethyl ether acetate were dropped four times at an interval of 30 minutes and were stirred for another hour. Then, 67 parts of butyl vinyl ether was added, and the mixture was stirred for 10 hours. Accordingly, resin composition (B-17) containing (co)polymer (A-17) with a solid content of 50.5% and a Gardner viscosity of FG was obtained. Regarding resin composition (B-17), its decomposition rate after being stored at 40°C for 30 days, number-average molecular weight (Mn) and weight-average molecular weight (mw) are shown in Tables 1 and 2.

[Table 1]

| Resin composition | | B-1 | B-2 | B-3 | B-4 | B-5 | B-6 | B-7 | B-8 | B-9 | B-10 |
|---|---|---|---|---|---|---|---|---|---|---|---|
| Monomer (m1) | M1 | 50 | | | | | | 50 | 50 | 50 | 50 |
| | M2 | | 50 | | | | | | | | |
| | M3 | | | 50 | | | | | | | |
| | M4 | | | | 50 | | 15 | | | | |
| | M5 | | | | | 50 | | | | | |
| | M6 | | | | | | | | | | |
| Monomer (m2) | MMA | 10 | 10 | 10 | 10 | 10 | 17.5 | 12.5 | 12.5 | 12.5 | 12.5 |
| | EA | | | | | | 7.5 | | | | |
| | 2-MTA | | | | | | 60 | | | | |
| | 2-MTMA | 40 | 40 | 40 | 40 | 40 | | 37.5 | 37.5 | 37.5 | 37.5 |
| | MAA | | | | | | | | | | |
| Total | | 100 | 100 | 100 | 100 | 100 | 100 | 100 | 100 | 100 | 100 |
| 1-alkenyl alkyl ether | butyl vinyl ether | 7.3 | | | | | 6.2 | 2.9 | 0.8 | | 7.3 |
| | isobutyl vinyl ether | | 7.1 | | | | | | | | |
| | cyclohexyl vinyl ether | | | 9.5 | | | | | | | |
| | ethylhexyl vinyl ether | | | | 11.9 | | | | | | |
| | 3,4-dihydro-2H-pyran | | | | | 25 | | | | | |
| Basic compound | pyridine | | | | | | | | | 5 | |
| Acidic compound | acetic acid | | | | | | | | | | 0.3 |
| Dewatering agent | molecular sieve 4A | | | | | | | | | | |
| Ratio (mol%) | | 27.2 | 26.6 | 32 | 36.9 | 101 | 101 | 10.6 | 3.0 | 0 | 49.8 |
| Initiator | AIBN | 1.3 | 1.3 | 1.3 | 1.3 | 1.3 | | 0.7 | | 3.5 | 3.5 |
| | AMBN | | | | | | 1 | | | | |

(continued)

| Resin composition | | B-1 | B-2 | B-3 | B-4 | B-5 | B-6 | B-7 | B-8 | B-9 | B-10 |
|---|---|---|---|---|---|---|---|---|---|---|---|
| Characteristics | solid content (mass%) | 50.2 | 49.6 | 50.2 | 49.5 | 52.2 | 50 | 49.6 | 50.4 | 50.3 | 49.9 |
| | Brookfield viscosity (mPa· s) (25°C) | 170 | 150 | 510 | 120 | 890 | 220 | 320 | 160 | 150 | 160 |
| | Gardner viscosity (25°C) | G | EF | S | E | VW | H | M | G | FG | GH |
| | decomposition rate of hemiacetal ester group after storage at 40°C for 30 days | 2.0% | 1.8% | 1.7% | 1.5% | 1.1% | 1.9% | 4.5% | 7.5% | 1.3% | 1.1% |
| | Mn | 7600 | 7100 | 7400 | 7200 | 7500 | 8900 | 10200 | 7600 | 5600 | 5700 |
| | Mw | 21000 | 21000 | 21000 | 21000 | 21000 | 24000 | 32000 | 21000 | 13400 | 13200 |

[Table 2]

| Resin composition | | B-11 | B-12 | B-13 | B-14 | B-15 | B-16 | B-17 | B-18 | B-19 |
|---|---|---|---|---|---|---|---|---|---|---|
| Monomer (m1) | M1 | 50 | 25 | 25 | 50 | | | | | |
| | M2 | | | | | | | | | |
| | M3 | | | | | | | | | |
| | M4 | | | | | | 50 | | | |
| | M5 | | | | | 50 | | | | |
| | M6 | | | | | | | | | 50 |
| Monomer (m2) | MMA | 12.5 | 24 | 17.5 | 50 | 25 | 50 | 17.5 | 50 | 40 |
| | EA | | 36 | 20 | | 25 | | 20 | | 10 |
| | 2-MTA | | | | | | | | | |
| | 2-MTMA | 37.5 | 15 | 37.5 | | | | 37.5 | 50 | |
| | MAA | | | | | | | 11.6 | | |
| Total | | 100 | 100 | 100 | 100 | 100 | 100 | 86.6 | 100 | 100 |
| 1-alkenyl alkyl ether | butyl vinyl ether | 7.3 | 6.7 | 6.7 | 6.7 | | | 67 | | |
| | isobutyl vinyl ether | | | | | | | | | |
| | cyclohexyl vinyl ether | | | | | | | | | |
| | ethylhexyl vinyl ether | | | | | | 11.9 | | | |
| | 3,4-dihydro-2H-pyran | | | | | 12.5 | | | | |
| Basic compound | pyridine | | | | | | | | | |
| Acidic compound | acetic acid | | | | | | | | | |
| Dewatering agent | molecular sieve 4A | 3 | | | | | | | | |
| Ratio (mol%) | | 49.8 | 49.8 | 49.8 | 24.9 | 50 | 36.9 | 400 | - | 0 |
| Initiator | AIBN | 3.5 | 3.5 | 3.5 | 1.5 | 1.5 | 1.5 | 1.5 | 1.5 | 1.5 |
| | AMBN | | | | | | | | | |

(continued)

| Resin composition | | B-11 | B-12 | B-13 | B-14 | B-15 | B-16 | B-17 | B-18 | B-19 |
|---|---|---|---|---|---|---|---|---|---|---|
| Characteristics | solid content (mass%) | 52.5 | 59.7 | 59.9 | 50.3 | 51.2 | 50 | 50.5 | 50.6 | 49.7 |
| | Brookfield viscosity (mPa· s) (25°C) | 250 | 540 | 600 | 330 | 2260 | 880 | GH | 310 | 190 |
| | Gardner viscosity (25°C) | JK | s | T | MN | YZ | UV | FG | MN | GH |
| | decomposition rate of hemiacetal ester group after storage at 40°C for 30 days | 0.9% | 1.8% | 1.9% | 1.8% | 1.4% | 1.6% | 1.3% | - | 25.0% |
| | Mn | 5500 | 5500 | 5513 | 7700 | 7200 | 7100 | 8000 | 7900 | 8000 |
| | Mw | 13500 | 14600 | 13300 | 17500 | 19000 | 22000 | 20000 | 18200 | 20000 |

Ratios (mol%) in tables indicate the following. (total molar number of the monomer in formula (31), (32), (33)) / (total molar number of structural units having the structure represented by formula (1), (2), (3))

The abbreviations in Tables 1 and 2 refer to those listed below.

MMA: methyl methacrylate
EA: ethyl acrylate
2-MTA: 2-methoxyethyl acrylate
2-MTMA: 2-methoxyethyl methacrylate
MAA: methacrylic acid
AIBN: 2,2'-azoisobutyronitrile
AMBN: 2,2'-azobis-2-methylbutyronitrile

[Examples 1 to 19, Comparative Examples 1 to 2]

Resin compositions B-1 to B-19, antifouling agents and the like were mixed to have the ratios specified in Tables 3 and 4 using a high-speed disperser. Accordingly, antifouling coating compositions were obtained respectively.

Evaluation results of antifouling coating compositions are shown in Tables 3 and 4.

[Table 3]

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| composition makeup | resin composition | B-1 | | 41 | | | | | | | | | |
| | | B-2 | | | 42 | | | | | | | | |
| | | B-3 | | | | 42 | | | | | | | |
| | | B-4 | | | | | 42 | | | | | | |
| | | B-5 | | | | | | 40 | | | | | |
| | | B-6 | | | | | | | 37 | 37 | | | |
| | | B-7 | | | | | | | | | 42 | | |
| | | B-8 | | | | | | | | | | 42 | |
| | | B-9 | | | | | | | | | | | 42 |
| | pigment | talc | | | | | | | 17 | 17 | | | |
| | | zinc oxide | | | | | | | 19 | 19 | | | |
| | | sedimentable barium sulfate | | | | | | | 10 | 10 | | | |
| | antifouling agent | cuprous oxide | | 46 | 48 | 48 | 48 | 45 | | | 48 | 48 | 48 |
| | | zinc pyrithione | | | | | | | 5.2 | 3 | | | |
| | | medetomidine | | | | | | | | 6 | | | |
| | | antifouling agent (1) | | | | | | | 3 | | 3 | | |
| | basic compound | diethylamine | | | | | | | | | | | |
| | dewatering agent | molecular sieve 4A | | | | | | | | 2 | | | |
| | thermoplastic resin | additive (1) | | 1 | 1 | 1 | 1 | 1 | 1 | 1 | 1 | 1 | 1 |
| | | additive (2) | | 3 | 3 | 3 | 3 | 3 | 2 | 2 | 3 | 3 | 3 |
| | | additive (3) | | | | | | | 1 | | | | |
| | | rosin | | | | | | | | | | | |
| | silicone oil | KF96 | | | | | | | | | | | |
| | solvent | xylene | | 9 | 7 | 6 | 6 | 11 | 4.8 | 3 | 3 | 6 | 6 |
| | total | | | 100 | 101 | 100 | 100 | 100 | 100 | 100 | 100 | 100 | 100 |
| Properties of coating composition | | nonvolatile content (mass%) | | 70.5 | 72.4 | 72.8 | 72.3 | 68.8 | 76.5 | 78.3 | 75.8 | 72.8 | 72.8 |
| | | Brookfield viscosity (mPa·s) (25°C) | | 550 | 770 | 620 | 600 | 590 | 10500 | 9500 | 1000 | 850 | 900 |
| | | VOC (g/L) | | 483.6 | 466 | 458 | 458 | 499 | 382 | 365 | 418 | 454 | 457 |
| Coating suitability | | | | A | A | A | A | A | B | B | A | A | A |
| Water resistance test | | | | A | A | A | A | A | A | A | B | B | B |
| Rate of change in viscosity of coating composition | | | | 222% | 208% | 192% | 189% | 101% | 101% | 105% | 880% | 1010% | 180% |
| Coating film performance | | static antifouling performance | | A | A | A | A | C | A | A | B | B | B |
| | | coating film consumption rate test | after 3 mos. (μm) | 25 | 18 | 16 | 10 | 20 | 30 | 20 | 18 | 17 | 19 |
| | | | after 6 mos. (μm) | 60 | 44 | 38 | 22 | 40 | 66 | 40 | 48 | 48 | 38 |
| | | | after 3 mos. / after 6 mos. | 2.4 | 2.4 | 2.4 | 2.2 | 2.0 | 2.2 | 2.0 | 2.7 | 2.8 | 2.0 |

[Table 4]

| | | | | Example 11 | Example 12 | Example 13 | Example 14 | Example 15 | Example 16 | Example 17 | Example 18 | Example 19 | Comp. Example 1 | Comp. Example 2 |
|---|---|---|---|---|---|---|---|---|---|---|---|---|---|---|
| composition makeup | resin composition | B-1 | | | | 42 | | | | | | | | |
| | | B-10 | | 42 | | | | | | | | | | |
| | | B-11 | | | 42 | | | | | | | | | |
| | | B-12 | | | | | 42 | | | | | | | |
| | | B-13 | | | | | | 42 | | | | | | |
| | | B-14 | | | | | | | 42 | | | | | |
| | | B-15 | | | | | | | | 42 | | | | |
| | | B-16 | | | | | | | | | 42 | | | |
| | | B-17 | | | | | | | | | | 42 | | |
| | | B-18 | | | | | | | | | | | 42 | |
| | | B-19 | | | | | | | | | | | | 42 |
| | pigment | talc | | | | | | | | | | | | |
| | | zinc oxide | | | | | | | | | | | | |
| | | sedimentable barium sulfate | | | | | | | | | | | | |
| | antifouling agent | cuprous oxide | | 48 | 48 | 42 | 48 | 48 | 48 | 48 | 48 | 48 | 48 | 48 |
| | | zinc pyrithione | | | | | 0.5 | 0.5 | | 1 | 1 | 1 | | 1 |
| | | medetomidine | | | | | | | | | | | | |
| | | antifouling agent (1) | | | | | | | 1 | | | | 1 | |
| | basic compound | diethylamine | | | | | | | | | | | | |
| | dewatering agent | molecular sieve 4A | | | | | | | | | | | | |
| | thermoplastic resin | additive (1) | | 1 | 1 | 1 | 1 | 1 | 1 | 1 | 1 | 1 | 1 | 1 |
| | | additive (2) | | 3 | 3 | 3 | 3 | 3 | 3 | 3 | 3 | 3 | 3 | 3 |
| | | additive (3) | | | | | | | | | | | | |
| | | rosin | | | | 3 | | | | | | | | |
| | silicone oil | KF96 | | | | 3 | | | | | | | | |
| | solvent | xylene | | 6 | 6 | 6 | 5.5 | 5.5 | 6 | 6 | 6 | 6 | 6 | 6 |
| | total | | | 100 | 100 | 100 | 100 | 100 | 101 | 101 | 101 | 101 | 101 | 101 |
| Properties of coating composition | | nonvolatile content (mass%) | | 74.1 | 74.3 | 72.8 | 77.5 | 77.6 | 73.3 | 73.1 | 73.3 | 73.2 | 73 | 73.1 |
| | | Brookfield viscosity (mPa·s) (25°C) | | 1020 | 1020 | 880 | 1770 | 2480 | 660 | 1200 | 1200 | 1200 | 590 | 700 |
| | | VOC (g/L) | | 450 | 418 | 457 | 395 | 393 | 452 | 454 | 454 | 450 | 452 | 452 |
| Coating suitability | | | | A | A | A | A | A | A | A | A | A | A | A |
| Water resistance test | | | | B | B | B | A | A | C | C | B | A | A | D |
| Rate of change in viscosity of coating composition | | | | 130% | 100% | 270% | 245% | 221% | 220% | 180% | 170% | 130% | 99% | gelated |
| Coating film performance | | static antifouling performance | | B | B | A | A | A | C | C | B | A | D | D |
| | | coating film consumption rate test | after 3 mos. (μm) | 18 | 21 | 20 | 31 | 27 | 20 | 32 | 33 | 35 | 3 | 80 |
| | | | after 6 mos. (μm) | 38 | 41 | 40 | 69 | 55 | 31 | 44 | 65 | 70 | 3 | no film |
| | | | after 3 mos. / after 6 mos. | 2.1 | 2.0 | 2.0 | 2.2 | 2.0 | 1.6 | 1.4 | 2.0 | 2.0 | 1.0 | – |

The numerical values indicating composition makeup ratios in Tables 3 and 4 each refer to the amount (parts) incorporated into the composition. The amount of a polymer solution in Tables 3 and 4 is the entire amount of the solution.

The abbreviations used in Tables 3 and 4 refer to those listed below. antifouling agent (1): 4-bromo-2-(4-chlorophenyl)-5-(trifluoromethyl)-1H-pyrrole-3-carbonitrile

Additive (1): Toyoparax 150 (chlorinated paraffin, made by Tosoh)
Additive (2): Disparlon 4200-20 (polyethylene oxide wax, made by Kusumoto Chemicals, Ltd.)
Additive (3): Disparlon A603-20X (polyamide wax, made by Kusumoto Chemicals).

Examples 1 to 17 showed excellent long-lasting antifouling effects, while exhibiting excellent dissolution stability, crack resistance and storage stability.

When a composition (Comparative Example 1) did not include any monomer-derived structural unit having the structure represented by formula (1), (2) or (3), the results of static antifouling performance and coating film consumption rate testing were low, and the long-term self-polishing properties in coating film consumption rate testing were insufficient. When the decomposition rate of a composition (Comparative Example 2) was greater than 20% after being stored at 40°C for 30 days, its crack resistance, dissolution stability or storage stability was found insufficient.

INDUSTRIAL APPLICABILITY

According to the present invention, a resin composition is provided for producing a low-VOC antifouling coating composition having excellent storage stability and coatablility so that such an antifouling coating composition is provided to form a coating film that exhibits high dissolution stability and self-polishing properties while suppressing excessive film consumption and defects to achieve long-lasting antifouling effects. Therefore, the antifouling coating composition related to the present invention is suitable for application on marine structures, and its industrial applications are quite significant.

## Claims

1. A resin composition, configured to have

   a polymer (A), and
   at least one component selected from among acidic compounds, basic compounds and compounds reactable with acid,
   wherein the polymer (A) comprises at least one monomer-derived structural unit having the structure represented by formula (1), (2) or (3) below,
   after the resin composition is stored at 40°C for 30 days, the decomposition rate of the structure represented by formula (1), (2) or (3) in the polymer (A) is 20% or lower,
   the decomposition rate of the structure represented by formula (1), (2) or (3) is defined as:

$$\text{(decomposition rate)} = \{(\text{measured solid acid value (a)}) - (\text{theoretical solid acid value (b)})\} / (\text{theoretical solid acid value (c)}) \times 100$$

$$\text{(theoretical solid value)}=\sum(561*100/Mwi*wi)$$

   wherein, "wi" is the mass fraction of acidic functional group-containing monomer (i) of a copolymer (A), and "Mwi" indicates the molecular weight of the acidic functional group-containing monomer,
   the acidic functional group-containing monomer (i) is produced when the structure represented by formula (1), (2) or (3) is decomposed, and
   the measured solid acid value (a) is according to the following method:
   in a beaker, approximately 4.0 grams of a sample (A (g)) is weighed, into which 50 mL of a solution containing toluene and 95% ethanol at a ratio of 50/50 was added,
   the mixture is put into an airtight container and stirred for 5 minutes,
   a Hiranuma automatic titrator (AutoTitrator COM-1600) is used to perform potentiometric titration with a 0.5 mol/L potassium hydroxide solution (ethanol solution), having a factor (f) of 1.003 at 20°C,
   the end point is set at the maximum inclination point of the titration curve (titration volume = B (mL), titer of the KOH solution = f),
   the same procedure is conducted on a blank sample (titration volume = C (mL)), and the acid value is calculated by the following equation,

$$\text{solid acid value (mg KOH/g)} = \{(B\text{-}C)\times 0.5\times 56.11\times f\}/A/\text{solid component},$$

[Chemical Formula 1]

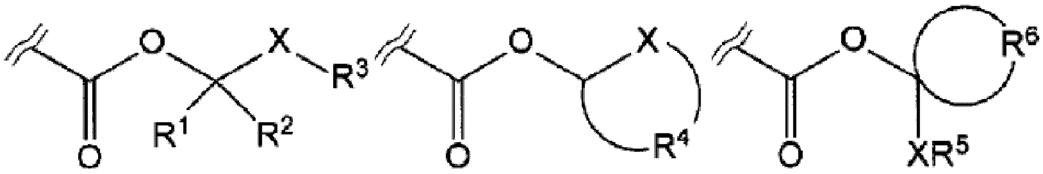

(1) (2) (3)

   Wherein, in the above formulas, "X" is an ether oxygen atom, sulfide sulfur atom or amine nitrogen atom; $R^1$ and $R^2$ are each a hydrogen atom or a C1 to C10 alkyl group; $R^3$ and $R^5$ are each a C1 to C20 alkyl, cycloalkyl or aryl group; and $R^4$ and $R^6$ are each a C1 to C10 alkylene group.

2. The resin composition according to Claim 1, wherein the compound reactable with acid is at least one compound

represented by formula (31), (32) or (33) below,

[Chemical Formula 2]

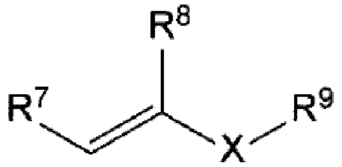
(3 1)

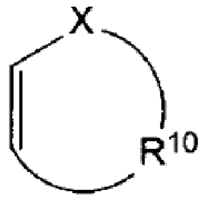
(3 2)

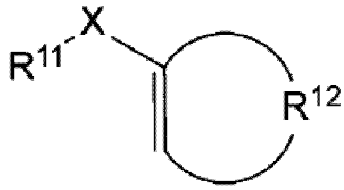
(3 3)

Wherein, in the above formulas, "X" is an ether oxygen atom, sulfide sulfur atom or amine nitrogen atom; $R^7$ is a hydrogen atom or a C1 to C9 alkyl group; $R^8$ is a hydrogen atom or a C1 to C10 alkyl group; $R^9$ and $R^{11}$ are each a C1 to C20 alkyl, cycloalkyl or aryl group; $R^{10}$ is a single bond or C1 to C9 alkylene group; and $R^{12}$ is a C1 to C9 alkylene group.

3. The resin composition according to Claim 1 or 2, wherein the polymer (A) comprises a monomer-derived structural unit having the structure represented by formula (1) below,

[Chemical Formula 3]

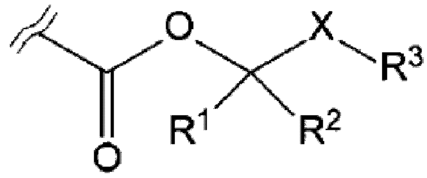
(1)

wherein, in the above formula (1), "X" is an ether oxygen atom, sulfide sulfur atom or amine nitrogen atom; $R^1$ and $R^2$ are each a hydrogen atom or a C1 to C10 alkyl group; $R^3$ is a C1 to C20 alkyl, cycloalkyl or aryl group; and the total number of carbon atoms in $R^1$, $R^2$ and $R^3$ is 4 or greater.

4. The resin composition according to any of Claims 1 to 3, wherein the polymer (A) comprises a monomer-derived structural unit having the structure represented by formula (1) below,

[Chemical Formula 4]

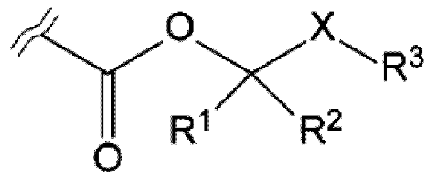
(1)

wherein in the above formula (1), "X" is an ether oxygen atom, sulfide sulfur atom or amine nitrogen atom; $R^1$ and $R^2$ are each a hydrogen atom or a C1 to C10 alkyl group; $R^3$ is a C1 to C20 alkyl, cycloalkyl or aryl group; and the total number of carbon atoms in $R^1$, $R^2$ and $R^3$ is 8 or greater.

5. The resin composition according to any of Claims 1 to 4, wherein the polymer (A) further comprises the structural unit derived from an oxyethylene group-containing (meth)acrylate monomer represented by formula (2-1) below,

$$Z^1\text{-}(CH_2CH_2O)_nR^{21} \cdots \qquad (2\text{-}1)$$

Wherein, in the formula, $Z^1$ is an acryloyloxy or methacryloyloxy group; $R^{21}$ is a hydrogen atom or a C1 to C10 alkyl or aryl group; and "n" is an integer of 1 to 15.

6. The resin composition according to any of any of Claims 1 to 5, wherein the weight-average molecular weight determined by gel permeation chromatography using polystyrene as standard resin of the polymer (A) is 2,000 to 19,000, the content of the polymer (A) is at least 57 mass% of the total mass of the resin composition, and the viscosity at 25°C determined using a Brookfield viscometer is lower than 2,000 mPa·s.

7. The resin composition according to any of any of Claims 1 to 6, wherein the weight-average molecular weight determined by gel permeation chromatography using polystyrene as standard resin of the polymer (A) is 3,000 to 16,000, the content of the polymer (A) is at least 59 mass% of the total mass of the resin composition, and the viscosity determined the same as above is lower than 1,000 mPa·s.

8. An antifouling coating composition, comprising:

a resin composition according to any of Claims 1 to 7; and
an antifouling agent.

9. The antifouling coating composition according to Claim 8, comprising at least one antifouling agent selected from among cuprous oxide, 4-bromo-2-(4-chlorophenyl)-5-(trifluoromethyl)-1H-pyrrole-3-carbonitrile, and medetomidine.

10. The antifouling coating composition according to Claim 8 or 9, wherein the content of a volatile organic compound is 410 g/L or less;
the content of a volatile organic compound is defined as:

$$\text{content of a volatile organic compound (g/L)} = \text{specific gravity of composition} \times 1000 \times (100 - \text{nonvolatile content}) / 100$$

wherein, the nonvolatile content is according to the following method:
in an aluminum dish, 0.50 grams of a sample (antifouling coating composition) is weighed, and 3 mL of toluene is added using a dropper to evenly spread the sample on the dish bottom so as to preliminarily dry the sample on a 70 to 80°C water bath,
then, final drying is conducted on the sample for 2 hours by using a 105°C hot air blower,
the nonvolatile content is calculated from the mass of sample prior to preliminary drying (pre-drying mass) and the mass after final drying (post-drying mass) using the following equation.

$$\text{nonvolatile content (mass\%)} = \text{post-drying mass/pre-drying mass} \times 100.$$

11. The antifouling coating composition according to any of Claims 8 to 10, wherein the viscosity at 25°C determined using a Brookfield viscometer is lower than 3,000 mPa·s.

12. The antifouling coating composition according to any of Claims 8 to 11, wherein the change in viscosity determined using a Brookfield viscometer is 400% or lower after being stored at 40°C for 90 days.

13. The antifouling coating composition according to any of Claims 8 to 12, further comprising a thermoplastic resin.

## Patentansprüche

1. Harzzusammensetzung, die konfiguriert ist, um ein Polymer (A) und wenigstens eine Komponente aufzuweisen, die aus Folgenden ausgewählt ist: sauren Verbindungen, basischen Verbindungen und Verbindungen, die mit Säure reagieren können, wobei das Polymer (A) wenigstens eine von einem Monomer gewonnene Struktureinheit umfasst, die eine durch die nachstehende Formel (1), (2) oder (3) dargestellte Struktur aufweist, nachdem die Harzzusammensetzung für 30 Tage bei 40 °C gelagert wurde, beträgt die Zersetzungsrate der durch die Formel (1), (2) oder (3) dargestellten Struktur in dem Polymer (A) 20 % oder weniger, wobei die Zersetzungsrate der durch die Formel (1), (2) oder (3) dargestellten Struktur als Folgendes definiert ist:

$$\text{(Zersetzungsrate)} = \{(\text{gemessener Feststoffsäurewert (a)}) - (\text{theoretischer Feststoffsäurewert (b)})\} / (\text{theoretischer Feststoffsäurewert (c)}) \times 100$$

$$\text{(theoretischer Feststoffwert)} = \Sigma(561*100/Mwi*wi),$$

wobei "wi" der Massenanteil eines Monomers (i), das eine saure funktionelle Gruppe enthält, eines Copolymers (A) ist und "Mwi" die Molekularmasse des Monomers, das eine saure funktionelle Gruppe enthält, angibt, wobei das Monomer (i), das die saure funktionelle Gruppe enthält, erzeugt wird, wenn die durch die Formel (1), (2) oder (3) dargestellte Struktur zersetzt wird, und der gemessene Feststoffsäurewert (a) gemäß dem folgenden Verfahren ist: In einem Becherglas werden ungefähr 4,0 g einer Probe (A (g)) gewogen, in die 50 ml einer Lösung, die Toluol und 95 % Ethanol in einem Verhältnis von 50/50 enthält, hinzugefügt wurden, wobei die Mischung in ein luftdichtes Behältnis gestellt und für 5 Minuten gerührt wird, ein automatischer Hiranuma-Titrierautomat (AutoTitrator COM-1600) verwendet wird, um eine potentiometrische Titration mit einer Kaliumhydroxidlösung (Ethanollösung) von 0,5 mol/l, die einen Faktor (f) von 1,003 bei 20 °C aufweist, durchzuführen, wobei der Endpunkt an dem maximalen Neigungspunkt der Titrationskurve (Titrationsvolumen = B (ml), Titer der KOH-Lösung = f) eingestellt ist, wobei die gleiche Vorgehensweise an einer Vergleichsprobe (Titrationsvolumen = C (ml)) vorgenommen wird, und der Säurewert durch die folgende Gleichung berechnet wird:

$$\text{Feststoffsäurewert (mg KOH/g)} = \{(B\text{-}C) \times 0{,}5 \times 56{,}11 \times f\}/A/\text{Feststoffkomponente},$$

[Chemische Formel 1]

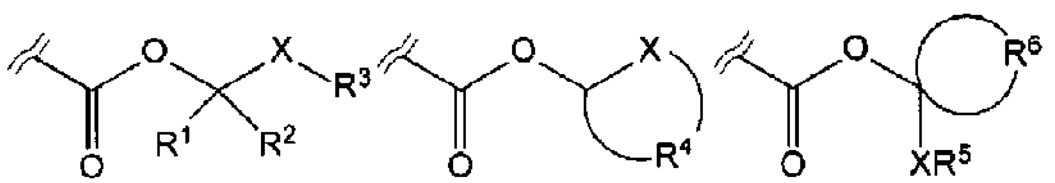

(1) (2) (3)

wobei in den obigen Formeln "X" ein Ethersauerstoffatom, ein Sulfidschwefelatom oder ein Aminstickstoffatom ist;

$R^1$ und $R^2$ jeweils ein Wasserstoffatom oder eine C1- bis C10-Alkylgruppe sind;
$R^3$ und $R^5$ jeweils eine C1- bis C20-Alkyl-, Cycloalkyl- oder Arylgruppe sind; und
$R^4$ und $R^6$ jeweils eine C1- bis C10-Alkylengruppe sind.

2. Harzzusammensetzung nach Anspruch 1, wobei die Verbindung, die mit Säure reagieren kann, wenigstens eine Verbindung ist, die durch die nachstehende Formel (31), (32) oder (33) dargestellt ist,

[Chemische Formel 2]

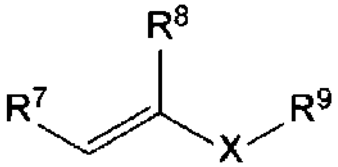
(3 1)

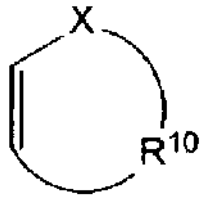
(3 2)

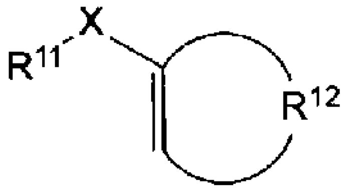
(3 3)

wobei in den obigen Formeln "X" ein Ethersauerstoffatom, ein Sulfidschwefelatom oder ein Aminstickstoffatom ist;

$R^7$ ein Wasserstoffatom oder eine C1- bis C9-Alkylgruppe ist;
$R^8$ ein Wasserstoffatom oder eine C1- bis C10-Alkylgruppe ist;
$R^9$ und $R^{11}$ jeweils eine C1- bis C20-Alkyl-, Cycloalkyl- oder Arylgruppe sind;
$R^{10}$ eine Einfachbindung oder eine C1- bis C9-Alkylengruppe ist; und
$R^{12}$ eine C1- bis C9-Alkylengruppe ist.

3. Harzzusammensetzung nach Anspruch 1 oder 2, wobei das Polymer (A) eine von einem Monomer gewonnene Struktureinheit umfasst, die die durch die nachstehende Formel (1) dargestellte Struktur aufweist,

[Chemische Formel 3]

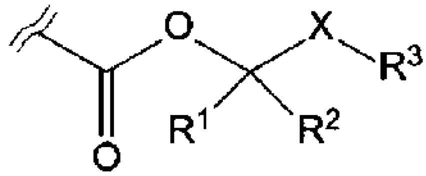
(1)

wobei in der obigen Formel (1) "X" ein Ethersauerstoffatom, ein Sulfidschwefelatom oder ein Aminstickstoffatom ist;

$R^1$ und $R^2$ jeweils ein Wasserstoffatom oder eine C1- bis C10-Alkylgruppe sind;
$R^3$ eine C1- bis C20-Alkyl-, Cycloalkyl- oder Arylgruppe ist; und
die Gesamtzahl von Kohlenstoffatomen in $R^1$, $R^2$ und $R^3$ 4 oder mehr ist.

4. Harzzusammensetzung nach einem der Ansprüche 1 bis 3, wobei das Polymer (A) eine von einem Monomer gewonnene Struktureinheit umfasst, die die durch die nachstehende Formel (1) dargestellte Struktur aufweist,

[Chemische Formel 4]

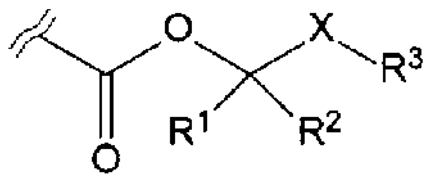
(1)

wobei in der obigen Formel (1) "X" ein Ethersauerstoffatom, ein Sulfidschwefelatom oder ein Aminstickstoffatom ist;

$R^1$ und $R^2$ jeweils ein Wasserstoffatom oder eine C1- bis C10-Alkylgruppe sind;

$R^3$ eine C1- bis C20-Alkyl-, Cycloalkyl- oder Arylgruppe ist; und
die Gesamtzahl von Kohlenstoffatomen in $R^1$, $R^2$ und $R^3$ 8 oder mehr ist.

**5.** Harzzusammensetzung nach einem der Ansprüche 1 bis 4, wobei das Polymer (A) ferner die Struktureinheit umfasst, die von einem (meth)Acrylatmonomer, das eine Oxyethylengruppe enthält, gewonnen wurde, das durch die nachstehende Formel (2-1) dargestellt ist,

$$Z^1\text{-}(CH_2CH_2O)_nR^{21} \cdots \qquad (2\text{-}1),$$

wobei $Z^1$ in der Formel eine Acryloyloxy- oder Methacryloyloxygruppe ist;
$R^{21}$ ein Wasserstoffatom oder eine C1- bis C10-Alkyl- oder Arylgruppe ist; und "n" eine ganze Zahl von 1 bis 15 ist.

**6.** Harzzusammensetzung nach einem der Ansprüche 1 bis 5, wobei die durch Gelchromatographie unter Verwendung von Polystyrol als Standardharz des Polymers (A) bestimmte gewichtsgemittelte Molekularmasse 2.000 bis 19.000 ist, wobei der Gehalt des Polymers (A) wenigstens 57 Masse-% der Gesamtmasse der Harzzusammensetzung ist, und die unter Verwendung eines Brookfield-Viskosimeters bei 25 °C bestimmte Viskosität geringer als 2.000 mPa·s ist.

**7.** Harzzusammensetzung nach einem der Ansprüche 1 bis 6, wobei die durch Gelchromatographie unter Verwendung von Polystyrol als Standardharz des Polymers (A) bestimmte gewichtsgemittelte Molekularmasse 3.000 bis 16.000 ist, wobei der Gehalt des Polymers (A) wenigstens 59 Masse-% der Gesamtmasse der Harzzusammensetzung ist, und die genauso wie oben bestimmte Viskosität geringer als 1.000 mPa·s ist.

**8.** Antifouling-Beschichtungszusammensetzung, umfassend:

eine Harzzusammensetzung nach einem der Ansprüche 1 bis 7; und
ein Antifoulingmittel.

**9.** Antifouling-Beschichtungszusammensetzung nach Anspruch 8, umfassend wenigstens ein Antifouling-Mittel, das aus Kupfer(I)-oxid, 4-Brom-2-(4-chlorphenyl)-5-(trifluormethyl)-1H-pyrrol-3-carbonitril und Medetomidin ausgewählt ist.

**10.** Antifouling-Beschichtungszusammensetzung nach Anspruch 8 oder 9, wobei der Gehalt einer flüchtigen organischen Verbindung höchstens 410 g/l ist;
wobei der Gehalt einer flüchtigen organischen Verbindung als Folgendes definiert ist:

$$\text{Gehalt einer flüchtigen organischen Verbindung (g/l)} = \text{spezifisches Gewicht der Zusammensetzung} \times 1000 \times (100\text{-nichtflüchtiger Gehalt}) / 100,$$

wobei der nichtflüchtige Gehalt gemäß dem folgenden Verfahren ist:
In einer Aluminiumschale werden 0,50 g einer Probe (Antifouling-Beschichtungszusammensetzung) gewogen und 3 ml Toluol werden unter Verwendung eines Tropfers hinzugefügt, um die Probe gleichmäßig auf dem Boden der Schale zu verteilen, um die Probe vorher bei 70 bis 80 °C auf einem Wasserbad zu trocknen, wobei dann das endgültige Trocknen der Probe für 2 Stunden unter Verwendung eines Warmluftgebläses bei 105 °C vorgenommen wird, der nichtflüchtige Gehalt aus der Masse der Probe vor dem vorherigen Trocknen (Vortrocknungsmasse) und der Masse nach dem endgültigen Trocknen (Nachtrocknungsmasse) wird unter Verwendung der folgenden Gleichung berechnet.

$$\text{Nichtflüchtiger Gehalt (Masse-\%)} = \text{Nachtrocknungsmasse/ Vortrocknungsmasse} \times 100.$$

**11.** Antifouling-Beschichtungszusammensetzung nach einem der Ansprüche 8 bis 10, wobei die unter Verwendung eines Brookfield-Viskosimeters bei 25 °C bestimmte Viskosität geringer als 3.000 mPa·s ist.

**12.** Antifouling-Beschichtungszusammensetzung nach einem der Ansprüche 8 bis 11, wobei die Veränderung der unter

Verwendung eines Brookfield-Viskosimeters bestimmten Viskosität nach einem Lagern für 90 Tage bei 40 °C 400% oder geringer ist.

**13.** Antifouling-Beschichtungszusammensetzung nach einem der Ansprüche 8 bis 12, ferner umfassend ein thermoplastisches Harz.

**Revendications**

**1.** Composition de résine, configurée pour avoir un polymère (A), et au moins un composant choisi parmi les composés acides, les composés basiques et les composés pouvant réagir avec un acide, dans laquelle le polymère (A) comprend au moins une unité structurelle dérivée d'un monomère ayant la structure représentée par la formule (1), (2) ou (3) ci-dessous, après stockage de la composition de résine à 40 °C pendant 30 jours, le taux de décomposition de la structure représentée par la formule (1), (2) ou (3) dans le polymère (A) est de 20 % ou moins, le taux de décomposition de la structure représentée par la formule (1), (2) ou (3) est défini comme :

(taux de décomposition) = {(indice d'acide solide mesuré (a)) - (indice d'acide solide théorique (b))} / (indice d'acide solide théorique (c)) × 100 (indice solide théorique)=Σ (561*100/Mwi*wi),

dans laquelle « wi » représente la fraction massique du monomère contenant un groupe fonctionnel acide (i) d'un copolymère (A) et « Mwi » indique le poids moléculaire du monomère contenant un groupe fonctionnel acide, le monomère contenant un groupe fonctionnel acide (i) est produit lorsque la structure représentée par les formules (1), (2) ou (3) est décomposée, et l'indice d'acide solide mesuré (a) est selon le procédé suivant :
dans un bêcher, environ 4,0 grammes d'un échantillon (A (g)) sont pesés, dans lequel 50 ml d'une solution contenant du toluène et 95 % d'éthanol à un rapport de 50/50 ont été ajoutés, le mélange est mis dans un récipient hermétique et agité pendant 5 minutes, un titrateur automatique Hiranuma (AutoTitrator COM-1600) est utilisé pour effectuer un titrage potentiométrique avec une solution d'hydroxyde de potassium de 0,5 mol/L (solution d'éthanol), ayant un facteur (f) de 1,003 à 20 °C, le point d'extrémité est fixé au point d'inclinaison maximal de la courbe de titrage (volume de titrage = B (mL), titre de la solution de KOH = f), la même procédure est effectuée sur un échantillon témoin (volume de titrage = C (mL)), et l'incide d'acide est calculé par l'équation suivante, l'indice d'acide solide (mg KOH/g) = {(B-C) × 0,5 × 56,11 × f}/A/composant solide,

[Formule chimique 1]

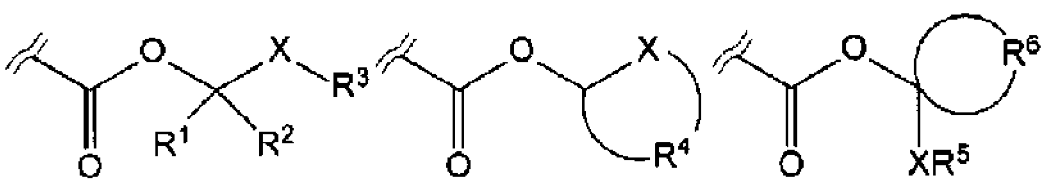

(1) (2) (3)

dans laquelle, dans les formules ci-dessus, « X » représente un atome d'oxygène d'éther, un atome de soufre de sulfure ou un atome d'azote d'aminé ;

$R^1$ et $R^2$ représentent chacun un atome d'hydrogène ou un groupe alkyle en C1 à C10 ;
$R^3$ et $R^5$ représentent chacun un groupe alkyle, cycloalkyle ou aryle en C1 à C20 ; et
$R^4$ et $R^6$ représentent un groupe alkylène en C1 à C10.

**2.** Composition de résine selon la revendication 1, dans laquelle le composé pouvant réagir avec l'acide est au moins un composé représenté par la formule (31), (32) ou (33) ci-dessous,

[Formule chimique 2]

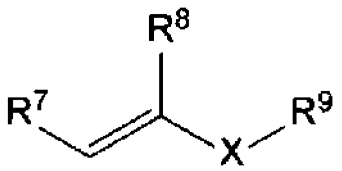
(3 1)

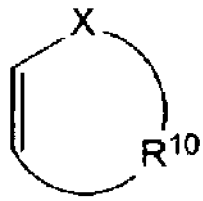
(3 2)

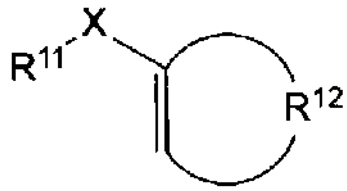
(3 3)

dans laquelle, dans les formules ci-dessus, « X » représente un atome d'oxygène d'éther, un atome de soufre de sulfure ou un atome d'azote d'aminé ;

$R^7$ représente un atome d'hydrogène ou un groupe alkyle en C1 à C9 ;
$R^8$ représente un atome d'hydrogène ou un groupe alkyle en C1 à C10 ;
$R^9$ et $R^{11}$ représentent chacun un groupe alkyle, cycloalkyle ou aryle en C1 à C20 ;
$R^{10}$ représente une liaison simple ou un groupe alkylène en C1 à C9 ; et
$R^{12}$ représente un groupe alkylène en C1 à C9.

**3.** Composition de résine selon la revendication 1 ou 2, dans laquelle le polymère (A) comprend une unité structurelle dérivée d'un monomère ayant la structure représentée par la formule (1) ci-dessous,

[Formule chimique 3]

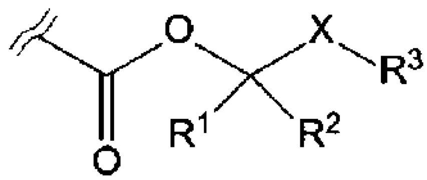
(1)

dans laquelle, dans la formule (1) ci-dessus, « X » est un atome d'oxygène d'éther, un atome de soufre de sulfure ou un atome d'azote d'amine ;

$R^1$ et $R^2$ représentent chacun un atome d'hydrogène ou un groupe alkyle en C1 à C10 ;
$R^3$ est un groupe alkyle, cycloalkyle ou aryle en C1 à C20 ; et
et le nombre total d'atomes de carbone dans $R^1$, $R^2$ et $R^3$ est égal ou supérieur à 4.

**4.** Composition de résine selon l'une quelconque des revendications 1 à 3, dans laquelle le polymère (A) comprend une unité structurelle dérivée d'un monomère ayant la structure représentée par la formule (1) ci-dessous,

[Formule chimique 4]

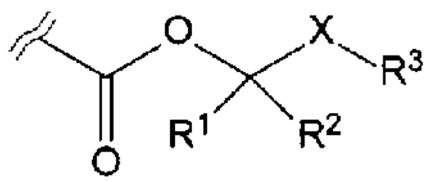
(1)

dans laquelle dans la formule (1) ci-dessus, « X » est un atome d'oxygène d'éther, un atome de soufre de sulfure

ou un atome d'azote d'amine ;

$R^1$ et $R^2$ représentent chacun un atome d'hydrogène ou un groupe alkyle en C1 à C10 ;
$R^3$ est un groupe alkyle, cycloalkyle ou aryle en C1 à C20 ; et
le nombre total d'atomes de carbone dans $R^1$, $R^2$ et $R^3$ est égal ou supérieur à 8.

**5.** Composition de résine selon l'une quelconque des revendications 1 à 4, dans laquelle le polymère (A) comprend en outre l'unité structurelle dérivée d'un monomère (méth)acrylate contenant un groupe oxyéthylène représenté par la formule (2-1) ci-dessous,

$$Z^1\text{-}(CH_2CH_2O)_nR^{21} \cdots \qquad (2\text{-}1),$$

dans laquelle, dans la formule, $Z^1$ est un groupe acryloyloxy ou méthacryloyloxy ; $R^{21}$ est un atome d'hydrogène ou un groupe alkyle ou aryle en C1 à C10 ; et « n » est un entier de 1 à 15.

**6.** Composition de résine selon l'une quelconque des revendications 1 à 5, dans laquelle le poids moléculaire moyen en poids déterminé par chromatographie par perméation de gel en utilisant du polystyrène comme résine standard du polymère (A) est compris entre 2 000 et 19 000, la teneur du polymère (A) représente au moins 57 % en masse de la masse totale de la composition de résine, et la viscosité à 25 °C déterminée à l'aide d'un viscosimètre Brookfield est inférieure à 2 000 mPa·s.

**7.** Composition de résine selon l'une quelconque des revendications 1 à 6, dans laquelle le poids moléculaire moyen en poids déterminé par chromatographie par perméation de gel en utilisant du polystyrène comme résine standard du polymère (A) est compris entre 3 000 et 16 000, la teneur du polymère (A) représente au moins 59 % en masse de la masse totale de la composition de résine, et la viscosité déterminée comme ci-dessus est inférieure à 1 000 mPa·s.

**8.** Composition de revêtement antiantisalissure comprenant :

une composition de résine selon l'une quelconque des revendications 1 à 7 ; et
un agent antiantisalissure.

**9.** Composition de revêtement antisalissure selon la revendication 8, comprenant au moins un agent antisalissure choisi parmi l'oxyde cuivreux, le 4-bromo-2-(4-chlorophényl)-5-(trifluorométhyl) -1H-pyrrole-3-carbonitrile, et la médétomidine.

**10.** Composition de revêtement antiantisalissure selon la revendication 8 ou 9, dans laquelle la teneur d'un composé organique volatil est de 410 g/L ou moins ;
la teneur d'un composé organique volatil est définie comme :
teneur d'un composé organique volatil (g/L) = densité de composition × 1000 × (100-teneur non volatile)/100 dans laquelle, la teneur non volatile est selon le procédé suivant :
dans un plat en aluminium, on pèse 0,50 grammes d'un échantillon (composition de revêtement antisalissure) et 3 ml de toluène à l'aide d'un compte-gouttes pour répartir uniformément l'échantillon sur le fond du plat de manière à sécher préalablement l'échantillon au bain-marie à 70 à 80 °C, puis, le séchage final est réalisé sur l'échantillon pendant 2 heures à l'aide d'une soufflante à air chaud à 105 °C, la teneur non volatile est calculée à partir de la masse d'échantillon avant le séchage préalable (masse avant séchage) et de la masse après séchage final (masse après séchage) à l'aide de l'équation suivante :

$$\text{teneur non volatile (\% en masse)} = \text{masse après séchage/masse avant séchage} \times 100.$$

**11.** Composition de revêtement antisalissure selon l'une quelconque des revendications 8 à 10, dans laquelle la viscosité à 25 °C déterminée à l'aide d'un viscosimètre Brookfield est inférieure à 3 000 mPa·s.

**12.** Composition de revêtement antisalissure selon l'une quelconque des revendications 8 à 11, dans laquelle le changement de viscosité déterminé à l'aide d'un viscosimètre Brookfield est de 400 % ou moins après avoir été stocké à 40 °C pendant 90 jours.

13. Composition de revêtement antisalissure selon l'une quelconque des revendications 8 à 12, comprenant en outre une résine thermoplastique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015084199 A
- JP 2015175470 A
- JP 2015177629 A
- JP 2002012630 A
- JP H0764985 B
- JP H04103671 A
- EP 1367100 A
- US 2012010342 A
- US 2009053366 A

### Non-patent literature cited in the description

- Polymer Handbook